# EUROPEAN PATENT APPLICATION

(11) **EP 3 480 178 A1**
(43) Date of publication of application: **08.05.2019**
(21) Application number: 17820076.2
(22) Date of filing: 26.06.2017
(51) Int. Cl.: C03C 3/068, C03C 3/15, C03C 3/155, C03C 3/19, C03C 3/21, C03C 3/253, G02B 1/00

(54) **OPTICAL GLASS, PREFORM MATERIAL, AND OPTICAL ELEMENT**

(30) Priority: 29.06.2016 JP 2016129383; 29.06.2016 JP 2016129387
(71) Applicant: Ohara Inc., Chuo-ku Sagamihara-shi Kanagawa 252-5286 (JP)
(72) Inventor: MOMONO Kiyoyuki, Sagamihara-Shi Kanagawa 252-5286 (JP)
(74) Representative: SSM Sandmair
(86) International application number: PCT/JP2017/023329
(87) International publication number: WO 2018/003719

(57) **Abstract**

Provided are an optical glass that has optical properties including a medium refractive index and low dispersion and that has good chemical durability and a low specific gravity, and a preform and an optical element that use the optical glass.

The optical glass contains a SiO₂ component: 0% or more and less than 30.0%; 8.0% to 30.0% of an Al₂O₃ component; less than 20.0% of an RO component (where R represents at least one selected from the group consisting of Zn, Mg, Ca, Sr, and Ba) in terms of a mass sum; and 10.0% to 55.0% of an Ln₂O₃ component (where Ln represents at least one selected from the group consisting of La, Gd, Y, and Lu) in terms of a mass sum.
A mass ratio (SiO₂ + Al₂O₃) /B₂O₃ is 0.3 to 10.0, and the optical glass has a refractive index (n_{d}) of 1.58 or more and 1.80 or less and an Abbe number (v_{d}) of 35 or more and 65 or less.

## Description

### Technical Field

The present invention relates to an optical glass, a preform material, and an optical element.

### Background Art

In recent years, digitization and realization of higher definition of devices that use optical systems have been rapidly advanced. In the fields of various optical devices such as image pickup devices, e.g., digital cameras and video cameras, and image reproduction (projection) devices, e.g., projectors and projection televisions, there have been increasing requirements for reducing the number of optical elements, such as lenses and prisms, used in the optical systems to reduce the weight and size of the entire optical systems.

In particular, there has been a significantly increasing demand for, among optical glasses for producing optical elements, medium-refractive index low-dispersion glasses having a refractive index (n_{d}) of 1.58 or more and an Abbe number (v_{d}) of 35 or more and 65 or less and capable of realizing the reduction in the weight and size of the entire optical systems and performing chromatic aberration correction.

Glass compositions that are typically described in PTL 1 to PTL 2 are known as such medium-refractive index low-dispersion glasses. However, these B₂O₃-La₂O₃-based glass compositions have insufficient durability because they are often weak against water and acids due to properties of glass components that are generally used. Therefore, the resulting glass may deteriorate during a polishing process of the glass, which may result in disadvantages in terms of production process.

In addition, since monitoring cameras and vehicle-mounted cameras, whose demands have been growing in recent years, are constantly used outdoors, the cameras are often exposed to the weather, water vapor in air, and the like. When image pickup elements that use existing glass compositions are used on the assumption that the elements are used in the external environment for a long period, the glass compositions described in PTL 1 to PTL 2 do not achieve sufficient durability.

### Citation List

### Patent Literature

PTL 1: Japanese Unexamined Patent Application Publication No. 55-080736
PTL 2: Japanese Unexamined Patent Application Publication No. 11-139844
PTL 3: Japanese Unexamined Patent Application Publication No. 11-071129

### Summary of Invention

### Technical Problem

The present invention has been made in view of the problems described above. An object of the present invention is to obtain an optical glass having optical constants in the predetermined ranges described above and having good chemical durability and a low specific gravity. Solution to Problem

The inventors of the present invention have conducted extensive tests and studies in order to solve the problems described above. As a result, it was found that glasses that solved the problems were obtained when the glasses had specific compositions, and this finding led to the realization of the present invention. In particular, the inventor of the present invention provides optical glasses of a first embodiment ((1) to (8) described below) and optical glasses of a second embodiment ((9) to (14) described below).

(1) An optical glass containing:
   in terms of mass%,
   a SiO₂ component:0% or more and less than 30.0%;
   8.0% to 30.0% of an Al₂O₃ component;
   less than 20.0% of an RO component (where R represents at least one selected from the group consisting of Zn, Mg, Ca, Sr, and Ba) in terms of a mass sum; and
   10.0% to 55.0% of an Ln₂O₃ component (where Ln represents at least one selected from the group consisting of La, Gd, Y, and Lu) in terms of a mass sum,
   in which a mass ratio (SiO₂ + Al₂O₃)/B₂O₃ is 0.3 to 10.0, and the optical glass has a refractive index (n_{d}) of 1.58 or more and 1.80 or less and an Abbe number (v_{d}) of 35 or more and 65 or less.
(2) The optical glass according to (1), in which a mass ratio (Al₂O_{3/}Ln₂O₃) is 0.1 to 1.0.
(3) The optical glass according to (1) or (2), containing:
   in terms of mass%,
   a B₂O₃ component:more than 0% and 50.0% or less;
   a La₂O₃ component:0% to 55.0%;
   an Y₂O₃ component:0% to 55.0%;
   a Gd₂O₃ component:0% to 55.0%;
   a Lu₂O₃ component:0% to 10.0%;
   an Yb₂O₃ component:0% to 10.0%;
   a ZrO₂ component:0% to 10.0%;
   a TiO₂ component:0% to 10.0%;
   a Nb₂O₅ component:0% to 15.0%;
   a Ta₂O₅ component:0% to 10.0%;
   a WO₃ component:0% to 10.0%;
   a ZnO component:0% to 15.0%;
   a MgO component:0% to 15.0%;
   a CaO component:0% to 15.0%;
   a SrO component:0% to 15.0%;
   a BaO component:0% to 15.0%;
   a Li₂O component:0% to 8.0%;
   a Na₂O component:0% to 8.0%;
   a K₂O component:0% to 8.0%;
   a GeO₂ component:0% to 10.0%;
   a Ga₂O₃ component:0% to 10.0%;
   a P₂O₅ component:0% to 30.0%;
   a Bi₂O₃ component:0% to 5.0%;
   a TeO₂ component:0% to 5.0%;
   a SnO₂ component:0% to 3.0%; and
   an Sb₂O₃ component:0% to 1.0%,
   in which a content of a fluoride with which a part or the whole of one or two or more of the oxides of metal elements is replaced is 0 mass% to 15.0 mass% in terms of F.
(4) The optical glass according to any one of (1) to (3), in which a mass sum (ZrO₂ + TiO₂ + Nb₂O₅ + Ta₂O₅ + WO₃ + Bi₂O₃ + TeO₂) is 0% or more and 20.0% or less.
(5) The optical glass according to any one of (1) to (4), in which a mass ratio (Ln₂O₃ + SiO₂ + Al₂O₃) / (RO + Rn₂O + B₂O₃) is 1.0 to 10.0.
(6) The optical glass according to any one of (1) to (5), in which a mass ratio (Ln₂O₃/RO) is 1.0 or more.
(7) The optical glass according to any one of (1) to (6), in which a mass ratio (Ln₂O₃/Rn₂O) is 3.0 or more.
(8) The optical glass according to any one of (1) to (7), containing 0.0% to 8.0% of an Rn₂O component (where Rn represents at least one selected from the group consisting of Li, Na, and K) in terms of a mass sum.
(9) An optical glass in which,
   in terms of mass%,
   a mass sum (SiO₂ + B₂O₃) is 35.0% to 65.0%,
   a mass sum of an Ln₂O₃ component (where Ln represents at least one selected from the group consisting of La, Gd, Y, and Lu) is 5.0% to 55.0%,
   a mass sum of an Rn₂O component (where Rn represents at least one selected from the group consisting of Li, Na, and K) is 0.0% to 10.0%,
   a mass ratio (Ln₂O₃/Rn₂O) is 1.0 or more,
   a product d × RA of a specific gravity (d) of the glass and a class (RA) of a powder method acid resistance is 15.0 or less, and
   the optical glass has a refractive index (n_{d}) of 1.58 or more and 1.80 or less and an Abbe number (v_{d}) of 35 or more and 65 or less.
(10) The optical glass according to (9), containing:
   in terms of mass%,
   a SiO₂ component:0% to 50.0%;
   a B₂O₃ component:0% to 50.0%;
   0% to 30.0% of an Al₂O₃ component;
   a La₂O₃ component:0% to 55.0%;
   an Y₂O₃ component:0% to 55.0%;
   a Gd₂O₃ component:0% to 40.0%;
   a Lu₂O₃ component:0% to 10.0%;
   an Yb₂O₃ component:0% to 10.0%;
   a ZrO₂ component:0% to 10.0%;
   a TiO₂ component:0% to 10.0%;
   a Nb₂O₅ component:0% to 15.0%;
   a Ta₂O₅ component:0% to 10.0%;
   a WO₃ component:0% to 10.0%;
   a ZnO component:0% to 40.0%;
   a MgO component:0% to 20.0%;
   a CaO component:0% to 40.0%;
   a SrO component:0% to 40.0%;
   a BaO component:0% to 40.0%;
   a Li₂O component:0% to 8.0%;
   a Na₂O component:0% to 8.0%;
   a K₂O component:0% to 8.0%;
   a GeO₂ component:0% to 10.0%;
   a Ga₂O₃ component:0% to 10.0%;
   a P₂O₅ component:0% to 30.0%;
   a Bi₂O₃ component:0% to 5.0%;
   a TeO₂ component:0% to 5.0%;
   a SnO₂ component:0% to 3.0%; and
   an Sb₂O₃ component:0% to 1.0%,
   in which a content of a fluoride with which a part or the whole of one or two or more of the oxides of metal elements is replaced is 0 mass% to 15.0 mass% in terms of F.
(11) The optical glass according to (9) or (10), in which a mass sum (SiO₂ + Al₂O₃) is 5.0% to 50.0%, and a mass ratio (SiO₂ + Al₂O₃)/B₂O₃ is 0.3 or more.
(12) The optical glass according to any one of (9) to (11), in which a mass sum (ZrO₂ + TiO₂ + Nb₂O₅ + Ta₂O₅ + WO₃ + Bi₂O₃ + TeO₂) is 0% or more and 20.0% or less.
(13) The optical glass according to any one of (9) to (12), in which a mass ratio (Ln₂O₃ + SiO₂ + Al₂O₃) / (RO + Rn₂O + B₂O₃) is 0.3 to 10.0.
(14) The optical glass according to any one of (9) to (13), containing less than 40.0% of an RO component (where R represents at least one selected from the group consisting of Zn, Mg, Ca, Sr, and Ba) in terms of a mass sum.
(15) The optical glass according to any one of (1) to (14), in which a mass product (BaO × Gd₂O₃) is less than 8.0.
(16) The optical glass according to any one of (1) to (15), in which a mass product (SiO₂ + B₂O₃ + Al₂O₃) × Rn₂O is 0 to 500.
(17) The optical glass according to any one of (1) to (16), having a chemical durability (acid resistance) of Class 1 to Class 4 as measured by a powder method.
(18) A preform material formed of the optical glass according to any one of (1) to (17).
(19) An optical element formed of the optical glass according to any one of (1) to (17).
(20) An optical device including the optical element according to (19) .

### Advantageous Effects of Invention

According to the present invention, an optical glass having optical constants in predetermined ranges and having good chemical durability can be obtained.

### Description of Embodiments

While glasses according to embodiments of the present invention will now be described in detail, the present invention is not limited to the embodiments described below and can be carried out by making appropriate changes within the object of the present invention. To avoid redundancies, the explanation may be omitted as required. This will not limit the gist of the invention.

### [Glass component]

Compositional ranges of respective components constituting an optical glass of the present invention will be described below. In this specification, the content of each of the components is represented in units of mass% relative to a total amount of substances of the glass having a composition in terms of oxides unless otherwise stated. Herein, the "composition in terms of oxides" is a composition in which, assuming that oxides, composite salts, metal fluorides, and the like used as raw materials of components constituting the glass of the present invention are all decomposed and converted to oxides during melting, each component contained in the glass is represented on the assumption that a total amount of the produced oxides is 100 mass%.

### (Optical glass of first embodiment)

Components of an optical glass of the first embodiment will be described.
An SiO₂ component is an optional component that improves devitrification resistance and chemical durability when contained in an amount of more than 0%. Therefore, the lower limit of the content of the SiO₂ component is preferably more than 0%, more preferably 3.0%, still more preferably 6.0%, and most preferably 9.0%.

On the other hand, when the content of the SiO₂ component is less than 30.0%, a higher refractive index is easily obtained, and deterioration of meltability and an excessive increase in viscosity can be suppressed. Accordingly, the upper limit of the content of the SiO₂ component is preferably less than 30.0%, more preferably 27.0%, still more preferably 25.0%, still more preferably 23.0%, still more preferably 21.0%, still more preferably 19.0%, and the most preferably 17.0%.

An Al₂O₃ component is an essential component having the effect of improving devitrification resistance and chemical durability. Accordingly, the lower limit of the content of the Al₂O₃ component is preferably 8.0%, more preferably 10.0%, still more preferably 12.0%, still more preferably 14.0%, and most preferably 16.0%.

On the other hand, when the content of the Al₂O₃ component is 30.0% or less, deterioration of devitrification resistance and a decrease in the refractive index due to excessive incorporation can be suppressed. Accordingly, the upper limit of the content of the Al₂O₃ component is preferably 30.0%, more preferably 28.0%, still more preferably 26.0%, still more preferably 24.0%, still more preferably 22.0%, still more preferably 20.0%, and most preferably 18.0%.

The sum of the content (mass sum) of an RO component (where R represents at least one selected from the group consisting of Zn, Mg, Ca, Sr, and Ba) is preferably less than 20.0%. In this case, deterioration of chemical durability and a decrease in devitrification resistance due to excessive incorporation can be suppressed.

Accordingly, the upper limit of the mass sum of the RO component is preferably less than 20.0%, more preferably 18.0%, still more preferably 16.0%, still more preferably 14.0%, still more preferably 12.0%, and still more preferably 10.0%.

In particular, when the content of the RO component is 8.0% or less, the effect of suppressing deterioration of chemical durability is more easily obtained. Accordingly, the upper limit is preferably 8.0%, more preferably 6.0%, still more preferably 4.0%, and most preferably 2.0%.

The sum of the content (mass sum) of an Ln₂O₃ component (where Ln represents at least one selected from the group consisting of La, Gd, Y, and Lu) is preferably in the range of 10.0% or more and 55.0% or less.

In particular, when this sum is 10.0% or more, the refractive index and the Abbe number of the glass are increased, and thus a glass having a desired refractive index and a desired Abbe number can be easily obtained. Accordingly, the lower limit of the mass sum of the Ln₂O₃ component is preferably 10.0%, more preferably 15.0%, still more preferably 20.0%, still more preferably 25.0%, still more preferably 30.0%, and most preferably 35.0%.

On the other hand, when this sum is 55.0% or less, the glass has a low liquidus temperature, and thus devitrification of the glass can be suppressed. Accordingly, the upper limit of the mass sum of the Ln₂O₃ component is preferably 55.0%, more preferably 50.0%, still more preferably 48.0%, and most preferably 45.0%.

When a mass ratio (SiO₂ + Al₂O₃)/(B₂O₃) is 0.3 or more, the effect of improving chemical durability of the glass is easily obtained. Accordingly, the lower limit of the mass ratio (SiO₂ + Al₂O₃)/(B₂O₃) is preferably 0.3, more preferably 0.4, still more preferably 0.5, still more preferably 0.6, still more preferably 0.7, and most preferably 0.8.

On the other hand, when this mass ratio is 10.0 or less, deterioration of meltability of the glass raw materials and an excessive increase in viscosity can be suppressed. Accordingly, the upper limit of the mass ratio of (SiO₂ + Al₂O₃)/(B₂O₃) is preferably 10.0 or less, more preferably 8.0, still more preferably 6.0, still more preferably 5.0, still more preferably 4.0, still more preferably 3.0, still more preferably 2.0, and most preferably 1.0.

When a B₂O₃ component is not contained, the value of (SiO₂ + Al₂O₃)/(B₂O₃) is assumed to be infinite.

When a mass ratio (Al₂O_{3/}Ln₂O₃) is 0.10 or more, the effect of improving devitrification resistance is easily obtained.

Accordingly, the lower limit of the mass ratio of (Al₂O_{3/}Ln₂O₃) is preferably 0.10, more preferably 0.15, still more preferably 0.20, still more preferably 0.25, still more preferably 0.30, and most preferably 0.35.

On the other hand, when this mass ratio is 1.0 or less, deterioration of meltability of the glass raw materials and an excessive increase in viscosity can be suppressed. Accordingly, the upper limit of the mass ratio of (Al₂O_{3/}Ln₂O₃) is preferably 1.0 or less, more preferably 0.9, still more preferably 0.8, still more preferably 0.7, still more preferably 0.6, and most preferably 0.5.

When the Ln₂O₃ component is not contained, the value of Al₂O₃/Ln₂O₃ is assumed to be infinite.

The B₂O₃ component is an optional component having the effect of improving meltability and devitrification resistance when contained in an amount of more than 0%. Accordingly, the lower limit of the content of the B₂O₃ component is preferably more than 0%, more preferably 5.0%, still more preferably 10.0%, still more preferably 15.0%, still more preferably 20.0%, and most preferably 25.0%.

On the other hand, when the content of the B₂O₃ component is 50.0% or less, deterioration of chemical durability of the glass can be suppressed. Accordingly, the upper limit of the content of the B₂O₃ component is preferably 50.0%, more preferably 45.0%, still more preferably 40.0%, still more preferably 35.0%, and most preferably 33.0%.

A La₂O₃ component is an optional component that increases the refractive index of the glass and that increases the Abbe number of the glass when contained in an amount of more than 0%. Accordingly, the lower limit of the content of the La₂O₃ component is preferably more than 0%, more preferably 5.0%, still more preferably 10.0%, still more preferably 15.0%, and most preferably 20.0%.

On the other hand, when the content of the La₂O₃ component is 55.0% or less, stability of the glass can be enhanced to suppress devitrification. Accordingly, the upper limit of the content of the La₂O₃ component is preferably 55.0%, more preferably 45.0%, still more preferably 40.0%, and most preferably 35.0%.

An Y₂O₃ component is an optional component that can reduce the material cost of the glass and that can reduce the specific gravity of the glass compared with other rare earth components while maintaining a high refractive index and a high Abbe number when contained in an amount of more than 0%. Accordingly, the lower limit of the content of the Y₂O₃ component is preferably more than 0%, more preferably 1.0%, still more preferably 3.0%, still more preferably 5.0%, still more preferably 8.0%, and still more preferably 10.0%.

On the other hand, when the content of the Y₂O₃ component is 55.0% or less, devitrification resistance of the glass can be enhanced. Accordingly, the upper limit of the content of the Y₂O₃ component is preferably 55.0%, more preferably 45.0%, still more preferably 40.0%, still more preferably 30.0%, still more preferably 25.0%, and most preferably 20.0%.

A Gd₂O₃ component is an optional component that can increase the refractive index of the glass and that can increase the Abbe number when contained in an amount of more than 0%.

On the other hand, when the Gd₂O₃ component, which is expensive among rare earth elements, is 55.0% or less, an increase in the specific gravity is suppressed, the material cost of the glass is reduced, and thus the optical glass can be produced at a lower cost. Accordingly, the upper limit of the content of the Gd₂O₃ component is preferably 55.0%, more preferably 45.0%, still more preferably 40.0%, still more preferably 30.0%, and still more preferably 20.0%.

In particular, when the Gd₂O₃ component is less than 10.0%, the material cost can be further reduced. Accordingly, the upper limit of the content of the Gd₂O₃ component is preferably less than 10.0%, more preferably less than 5.0%, still more preferably less than 1.0%, and still more preferably less than 0.1%. The Gd₂O₃ component may not be contained from the viewpoint of reducing the material cost and suppressing an increase in the specific gravity.

A Lu₂O₃ component is an optional component that can increase the refractive index of the glass and that can increase the Abbe number when contained in an amount of more than 0%.

On the other hand, when each content of the Lu₂O₃ component is 10.0% or less, the material cost of the glass is reduced, and thus the optical glass can be produced at a lower cost. Furthermore, devitrification resistance of the glass can be enhanced in this case. Accordingly, the upper limit of the content of the Lu₂O₃ component is preferably 10.0%, more preferably 5.0%, still more preferably 3.0%, still more preferably 1.0%, and still more preferably 0.1%. The Lu₂O₃ component may not be contained from the viewpoint of reducing the material cost.

An Yb₂O₃ component is an optional component that can increase the refractive index of the glass and that can increase the Abbe number when contained in an amount of more than 0%.

On the other hand, when the content of the Yb₂O₃ component is 10.0% or less, the material cost of the glass is reduced, and thus the optical glass can be produced at a lower cost. Furthermore, devitrification resistance of the glass can be enhanced in this case. Accordingly, the upper limit of the content of the Yb₂O₃ component is preferably 10.0%, more preferably 5.0%, still more preferably 3.0%, still more preferably 1.0%, and still more preferably 0.1%. The Yb₂O₃ component may not be contained from the viewpoint of reducing the material cost.

A ZrO₂ component is an optional component that can increase the refractive index and the Abbe number of the glass and that can improve devitrification resistance when contained in an amount of more than 0%.

On the other hand, when the content of the ZrO₂ component is 10.0% or less, devitrification due to excessive incorporation of the ZrO₂ component can be suppressed. Accordingly, the upper limit of the content of the ZrO₂ component is preferably 10.0%, more preferably 8.0%, still more preferably 6.0%, still more preferably 4.0%, still more preferably 2.0%, still more preferably 1.0%, still more preferably 0.5%, and still more preferably 0.1%.

A TiO₂ component is an optional component that can increase the refractive index of the glass when contained in an amount of more than 0%.

On the other hand, when the content of the TiO₂ component is 10.0% or less, devitrification due to excessive incorporation of the TiO₂ component can be suppressed, and a decrease in the transmittance of visible light (in particular, having a wavelength of 500 nm or less) through the glass can be suppressed. Accordingly, the upper limit of the content of the TiO₂ component is preferably 10.0%, more preferably 8.0%, still more preferably 6.0%, still more preferably 4.0%, still more preferably 2.0%, still more preferably 1.0%, still more preferably 0.5%, and still more preferably 0.1%.

A Nb₂O₅ component is an optional component that can increase the refractive index of the glass when contained in an amount of more than 0%.

On the other hand, when the content of the Nb₂O₅ component is 15.0% or less, devitrification due to excessive incorporation of the Nb₂O₅ component can be suppressed, and a decrease in the transmittance of visible light (in particular, having a wavelength of 500 nm or less) through the glass can be suppressed. Accordingly, the upper limit of the content of the Nb₂O₅ component is preferably 15.0%, more preferably 12.0%, still more preferably 10.0%, still more preferably 8.0%, still more preferably 5.0%, still more preferably 3.0%, still more preferably 1.0%, still more preferably 0.5%, and still more preferably 0.1%.

A Ta₂O₅ component is an optional component that can increase the refractive index of the glass and that can enhance devitrification resistance when contained in an amount of more than 0%.

On the other hand, when the expensive Ta₂O₅ component is 10.0% or less, the material cost of the glass is reduced, and thus the optical glass can be produced at a lower cost. Accordingly, the upper limit of the content of the Ta₂O₅ component is preferably 10.0%, more preferably 5.0%, still more preferably 3.0%, still more preferably 1.0%, and still more preferably 0.1%. The Ta₂O₅ component may not be contained from the viewpoint of reducing the material cost.

A WO₃ component is an optional component that can increase the refractive index of the glass and that can enhance devitrification resistance when contained in an amount of more than 0%.

On the other hand, when the content of the WO₃ component is 10.0% or less, the visible light transmittance can be increased by reducing coloring of the glass due to the WO₃ component. Accordingly, the upper limit of the content of the WO₃ component is preferably 10.0%, more preferably 8.0%, still more preferably 6.0%, still more preferably 4.0%, still more preferably 1.0%, still more preferably 0.5%, and still more preferably 0.1%.

A ZnO component is an optional component that improves low-temperature meltability when contained in an amount of more than 0%.

On the other hand, when the content of the ZnO component is 15.0% or less, a decrease in the Abbe number and a decrease in devitrification resistance due to excessive incorporation can be suppressed. Accordingly, the upper limit of the content of the ZnO component is preferably 15.0%, more preferably 12.0%, still more preferably 10.0%, still more preferably 8.0%, still more preferably 6.0%, still more preferably 4.0%, still more preferably 2.0%, and still more preferably 1.0%.

A MgO component is an optional component that improves low-temperature meltability when contained in an amount of more than 0%.

On the other hand, when the content of the MgO component is 15.0% or less, deterioration of chemical durability and a decrease in devitrification resistance due to excessive incorporation of the MgO component can be suppressed. Accordingly, the upper limit of the content of the MgO component is preferably 15.0%, more preferably 10.0%, still more preferably 8.0%, still more preferably 5.0%, still more preferably 3.0%, still more preferably 1.0%, and most preferably 0.1%.

A CaO component is an optional component that improves low-temperature meltability when contained in an amount of more than 0%.

On the other hand, when the content of the CaO component is 15.0% or less, deterioration of chemical durability and a decrease in devitrification resistance due to excessive incorporation of the CaO component can be suppressed. Accordingly, the upper limit of the content of the CaO component is preferably 15.0%, more preferably 10.0%, still more preferably 8.0%, still more preferably 5.0%, still more preferably 3.0%, and most preferably 1.0%.

A SrO component is an optional component that improves low-temperature meltability when contained in an amount of more than 0%.

On the other hand, when the content of the SrO component is 15.0% or less, deterioration of chemical durability and a decrease in devitrification resistance due to excessive incorporation of the SrO component can be suppressed. Accordingly, the upper limit of the content of the SrO component is preferably 15.0%, more preferably 10.0%, still more preferably 8.0%, still more preferably 5.0%, still more preferably 3.0%, still more preferably 1.0%, and most preferably 0.1%.

A BaO component is an optional component that improves low-temperature meltability when contained in an amount of more than 0%.

On the other hand, when the content of the BaO component is 15.0% or less, deterioration of chemical durability and a decrease in devitrification resistance due to excessive incorporation of the BaO component can be suppressed. Accordingly, the upper limit of the content of the BaO component is preferably 15.0%, more preferably 10.0%, still more preferably 8.0%, still more preferably 5.0%, still more preferably 3.0%, still more preferably 1.0%, and most preferably 0.1%.

A Li₂O component is an optional component that improves low-temperature meltability and formability of the glass when contained in an amount of more than 0%. Accordingly, the lower limit of the content of the Li₂O component is preferably more than 0%, more preferably more than 0.1%, and still more preferably 0.5%.

On the other hand, when the content of the Li₂O component is 8.0% or less, deterioration of chemical durability due to excessive incorporation of the Li₂O component can be suppressed. Accordingly, the upper limit of the content of the Li₂O component is preferably 8.0%, more preferably 6.0%, still more preferably 5.0%, still more preferably 4.0%, still more preferably 3.0%, still more preferably 2.0%, and most preferably 1.0%.

A Na₂O component is an optional component that improves low-temperature meltability when contained in an amount of more than 0%.

On the other hand, when the content of the Na₂O component is 8.0% or less, deterioration of chemical durability due to excessive incorporation of the Na₂O component can be suppressed. Accordingly, the upper limit of the content of the Na₂O component is preferably 8.0%, more preferably 6.0%, still more preferably 4.0%, still more preferably 2.0%, still more preferably 1.0%, and most preferably 0.1%.

A K₂O component is an optional component that improves low-temperature meltability when contained in an amount of more than 0%.

On the other hand, when the content of the K₂O component is 8.0% or less, deterioration of chemical durability due to excessive incorporation of the K₂O component can be suppressed. Accordingly, the upper limit of the content of the K₂O component is preferably 8.0%, more preferably 6.0%, still more preferably 4.0%, still more preferably 2.0%, still more preferably 1.0%, and most preferably 0.1%.

The sum of the content of an Rn₂O component (where Rn represents at least one selected from the group consisting of Li, Na, and K) is preferably 8.0% or less. In this case, deterioration of chemical durability due to excessive incorporation can be suppressed. Accordingly, the upper limit of the total content (mass sum) is preferably 8.0%, more preferably 6.0%, still more preferably 5.0%, still more preferably 4.0%, still more preferably 3.0%, still more preferably 2.0%, and most preferably 1.0%.

On the other hand, when this sum is more than 0%, deterioration of meltability and an excessive increase in viscosity can be suppressed. Accordingly, the lower limit of the mass sum of the Rn₂O component is preferably more than 0%, and more preferably more than 0.1%, and still more preferably 0.5%.

A GeO₂ component is an optional component that can increase the refractive index of the glass and that can improve devitrification resistance when contained in an amount of more than 0%.

However, since the material cost of GeO₂ is high, the production cost increases at a high content of GeO₂. Accordingly, the upper limit of the content of the GeO₂ component is preferably 10.0%, more preferably 5.0%, still more preferably 3.0%, still more preferably 1.0%, and still more preferably 0.1%. The GeO₂ component may not be contained from the viewpoint of reducing the material cost.

A Ga₂O₃ component is an optional component that can increase the refractive index of the glass and that can improve devitrification resistance when contained in an amount of more than 0%.

However, since the material cost of Ga₂O₃ is high, the production cost increases at a high content of Ga₂O₃. Accordingly, the upper limit of the content of the Ga₂O₃ component is preferably 10.0%, more preferably 5.0%, still more preferably 3.0%, still more preferably 1.0%, and still more preferably 0.1%. The Ga₂O₃ component may not be contained from the viewpoint of reducing the material cost.

A P₂O₅ component is an optional component that can decrease the liquidus temperature of the glass to enhance devitrification resistance when contained in an amount of more than 0%.

On the other hand, when the content of the P₂O₅ component is 30.0% or less, a decrease in chemical durability, in particular, water resistance of the glass can be suppressed. Accordingly, the upper limit of the content of the P₂O₅ component is preferably 30.0%, more preferably 20.0%, still more preferably 15.0%, still more preferably 10.0%, still more preferably 5.0%, still more preferably 1.0%, and the most preferably 0.1%.

A Bi₂O₃ component is an optional component that can increase the refractive index and that can decrease the glass transition point when contained in an amount of more than 0%.

On the other hand, when the content of the Bi₂O₃ component is 5.0% or less, coloring of the glass can be suppressed, and devitrification resistance can be enhanced. Accordingly, the upper limit of the content of the Bi₂O₃ component is preferably 5.0%, more preferably 3.0%, still more preferably 1.0%, and most preferably 0.1%.

A TeO₂ component is an optional component that can increase the refractive index and that can decrease the glass transition point when contained in an amount of more than 0%.

On the other hand, when glass raw materials are melted in a crucible made of platinum or in a melting tank in which a portion that comes in contact with a molten glass is formed of platinum, there may be a problem in that TeO₂ can form an alloy with platinum. Accordingly, the upper limit of the content of the TeO₂ component is preferably 5.0%, more preferably 3.0%, still more preferably 1.0%, and most preferably 0.1%.

A SnO₂ component is an optional component that can suppress oxidation of a molten glass to clarify the glass and that can increase the visible light transmittance of the glass when contained in an amount of more than 0%.

On the other hand, when the content of the SnO₂ component is 3.0% or less, coloring of the glass due to reduction of the molten glass and devitrification of the glass can be suppressed. In addition, since alloying of melting equipment (in particular, a noble metal such as Pt) and the SnO₂ component is suppressed, the life of the melting equipment can be extended. Accordingly, the content of the SnO₂ component is preferably 3.0% or less, more preferably 1.0% or less, still more preferably 0.5% or less, and most preferably 0.1% or less.

An Sb₂O₃ component is an optional component that can deaerate a molten glass when contained in an amount of more than 0%.

On the other hand, when the amount of Sb₂O₃ is excessively large, the transmittance in a short-wavelength region of the visible-light region deteriorates. Accordingly, the upper limit of the content of the Sb₂O₃ component is preferably 1.0%, more preferably 0.7%, still more preferably 0.5%, still more preferably 0.2%, and most preferably 0.1%.

The component that clarifies and deaerates the glass is not limited to the Sb₂O₃ component. Known clarifiers or deaerating agents in the field of the glass production or combinations thereof can be used.

A F component is an optional component that can decrease the glass transition point and that can improve devitrification resistance while increasing the Abbe number of the glass when the F component is contained in an amount of more than 0%.

However, when the content of the F component, that is, a total amount of fluorides with which a part or the whole of one or two or more of the oxides of metal elements are replaced exceeds 15.0% in terms of F, the volatilization amount of the F component increases. Consequently, it becomes difficult to obtain stable optical constants and to obtain a homogeneous glass.

Accordingly, the upper limit content of the F component is preferably 15.0%, more preferably 12.0%, still more preferably 10.0%, still more preferably 5.0%, still more preferably 3.0%, and most preferably 1.0%.

The F component can be contained in the glass by using, for example, ZrF₄, AlF₃, NaF, or CaF₂ as a raw material.

When a mass sum (ZrO₂ + TiO₂ + Nb₂O₅ + Ta₂O₅ + WO₃ + Bi₂O₃ + TeO₂) is 20.0% or less, the effect of improving devitrification resistance is easily obtained, and an excessive decrease in the Abbe number is suppressed to easily obtain a low-dispersion performance. Accordingly, the upper limit of the mass sum of (ZrO₂ + TiO₂ + Nb₂O₅ + Ta₂O₅ + WO₃ + Bi₂O₃ + TeO₂) is preferably 20.0%, more preferably 15.0%, still more preferably 10.0%, still more preferably 5.0%, still more preferably 3.0%, still more preferably 1.0%, and most preferably 0.1%.

When a mass ratio (Ln₂O₃ + SiO₂ + Al₂O₃)/(RO + Rn₂O + B₂O₃) is 1.0 or more, the effect of improving chemical durability of the glass is easily obtained. Accordingly, the lower limit of the mass ratio (Ln₂O₃ + SiO₂ + Al₂O₃)/(RO + R₂O + B₂O₃) is preferably 1.0 or more, more preferably 1.2, still more preferably 1.4, still more preferably 1.6, still more preferably 1.8, and most preferably 2.0.

On the other hand, when the mass ratio is 10.0 or less, deterioration of meltability of the glass raw materials and an excessive increase in viscosity can be suppressed. Accordingly, the upper limit of the mass ratio of (Ln₂O₃ + SiO₂ + Al₂O₃)/(RO + Rn₂O + B₂O₃) is preferably 10.0, more preferably 8.0, still more preferably 7.0, still more preferably 6.0, still more preferably 5.0, still more preferably 4.0, still more preferably 3.0, and most preferably 2.5.

When the RO, Rn₂O, and B₂O₃ components are not contained, the value of (Ln₂O₃ + SiO₂ + Al₂O₃)/(RO + Rn₂O + B₂O₃) is assumed to be infinite.

When a mass ratio (Ln₂O₃/RO) is 1.0 or more, the effect of improving chemical durability of the glass is easily obtained.

Accordingly, the lower limit of the mass ratio of (Ln₂O₃/RO) is preferably 1.0, more preferably 3.0, still more preferably 5.0, still more preferably 10.0, still more preferably 20.0, and most preferably 30.0.

When the RO component is not contained, the effect of improving chemical durability is more easily obtained. Accordingly, the upper limit of the mass ratio (Ln₂O₃/RO) is not particularly specified and may be infinite.

When a mass ratio (Ln₂O₃/Rn₂O) is 3.0 or more, the effect of improving chemical durability of the glass is easily obtained.

Accordingly, the lower limit of the mass ratio of (Ln₂O₃/Rn₂O) is preferably 3.0, more preferably 5.0, still more preferably 8.0, still more preferably 10.0, still more preferably 15.0, still more preferably 20.0, still more preferably 25.0, and most preferably 30.0. When the Rn₂O component is not contained, the effect of improving chemical durability is more easily obtained. Accordingly, the upper limit of the mass ratio of (Ln₂O₃/Rn₂O) is not particularly specified and may be infinite.

When a mass product (BaO × Gd₂O₃) is less than 8.0, the effect of reducing both the specific gravity and the cost of the glass is easily obtained. Accordingly, the upper limit of the mass product (BaO × Gd₂O₃) is preferably less than 8.0, more preferably 7.0, still more preferably 6.0, still more preferably 5.0, still more preferably 4.0, still more preferably 3.0, still more preferably 2.0, still more preferably 1.0, and most preferably 0.1.

When a mass product (SiO₂ + Al₂O₃ + B₂O₃) × Rn₂O is 500 or less, the effect of improving chemical durability of the glass while maintaining a high refractive index and a high Abbe number is easily obtained. Accordingly, the upper limit of the mass product of (SiO₂ + Al₂O₃ + B₂O₃) × Rn₂O is preferably 500, more preferably 450, still more preferably 400, still more preferably 350, still more preferably 300, still more preferably 250, still more preferably 200, still more preferably 150, and most preferably 100.

When a mass sum (SiO₂ + Al₂O₃) is 10.0% or more, the effect of improving chemical durability of the glass is easily obtained. Accordingly, the lower limit of the mass sum of (SiO₂ + Al₂O₃) is preferably 10.0%, more preferably 12.0%, still more preferably 14.0%, still more preferably 16.0%, still more preferably 18.0%, still more preferably 20.0%, still more preferably 23.0%, and most preferably 25.0%.

On the other hand, when this mass sum is 50.0% or less, deterioration of meltability of the glass raw materials and an excessive increase in viscosity can be suppressed. Accordingly, the upper limit of the mass sum of (SiO₂ + Al₂O₃) is preferably 50.0%, more preferably 45.0%, still more preferably 40.0%, still more preferably 38.0%, still more preferably 35.0%, still more preferably 32.0%, and most preferably 30.0%.

### (Optical glass of second embodiment)

Components of an optical glass of the second embodiment will be described.
When a mass sum (SiO₂ + B₂O₃) is 35.0% or more, the effect of improving devitrification resistance is easily obtained.

Accordingly, the lower limit of the mass sum of (SiO₂ + B₂O₃) is preferably 35.0%, more preferably 38.0%, and still more preferably 40.0%.

On the other hand, when this mass sum is 65.0% or less, deterioration of meltability of the glass raw materials and an excessive increase in viscosity can be suppressed. Accordingly, the upper limit of the mass sum of (SiO₂ + B₂O₃) is preferably 65.0%, more preferably 60.0%, and still more preferably 55.0%.

The SiO₂ component is an optional component that improves devitrification resistance and chemical durability. The lower limit of the content of the SiO₂ component is preferably more than 0%, more preferably 3.0%, still more preferably 6.0%, and most preferably 9.0%.

On the other hand, when the content of the SiO₂ component is 50.0% or less, a higher refractive index is easily obtained, and deterioration of meltability and an excessive increase in viscosity can be suppressed. Accordingly, the upper limit of the content of the SiO₂ component is preferably 50.0%, more preferably 45.0%, still more preferably 40.0%, still more preferably 35.0%, still more preferably 30.0%, still more preferably 25.0%, still more preferably 20.0%, and most preferably 15.0%.

The sum of the content (mass sum) of an Ln₂O₃ component (where Ln represents at least one selected from the group consisting of La, Gd, Y, and Lu) is preferably in the range of 5.0% or more and 55.0% or less.

In particular, when this sum is 5.0% or more, the refractive index and the Abbe number of the glass are increased, and thus a glass having a desired refractive index and a desired Abbe number can be easily obtained. Accordingly, the lower limit of the mass sum of the Ln₂O₃ component is preferably 5.0%, more preferably 15.0%, still more preferably 20.0%, still more preferably 25.0%, and most preferably 30.0%.

On the other hand, when this sum is 55.0% or less, the glass has a low liquidus temperature, and thus devitrification of the glass can be suppressed. Accordingly, the upper limit of the mass sum of the Ln₂O₃ component is preferably 55.0%, more preferably 50.0%, still more preferably 48.0%, and most preferably 45.0%.

The sum of the content (mass sum) of an Rn₂O component (where Rn represents at least one selected from the group consisting of Li, Na, and K) is preferably 10.0% or less. In this case, deterioration of chemical durability due to excessive incorporation can be suppressed. Accordingly, the upper limit of the total content is preferably 10.0%, more preferably 8.0%, still more preferably 6.0%, still more preferably 5.0%, still more preferably 4.0%, still more preferably 3.0%, still more preferably 2.0%, and most preferably 1.0%.

When a mass ratio (Ln₂O₃/Rn₂O) is 1.0 or more, the effect of improving chemical durability is easily obtained.

Accordingly, the lower limit of the mass ratio of (Ln₂O₃/Rn₂O) is preferably 1.0, more preferably 1.5, still more preferably 2.0, still more preferably 2.5, still more preferably 3.0, still more preferably 3.5, still more preferably 4.0, still more preferably 5.0, still more preferably 8.0, still more preferably 10.0, still more preferably 20.0, and most preferably 30.0.

When the mass sum Rn₂O component is not contained, the effect of improving chemical durability is more easily obtained. Accordingly, the upper limit of the mass ratio of (Ln₂O₃/Rn₂O) is not particularly specified and may be infinite.

The B₂O₃ component is an optional component having the effect of improving meltability and devitrification resistance. The lower limit of the content of the B₂O₃ component is preferably more than 0%, more preferably 5.0%, still more preferably 10.0%, still more preferably 15.0%, still more preferably 20.0%, and most preferably 25.0%.

On the other hand, when the content of the B₂O₃ component is 50.0% or less, deterioration of chemical durability of the glass can be suppressed. Accordingly, the upper limit of the content of the B₂O₃ component is preferably 50.0%, more preferably 45.0%, still more preferably 40.0%, still more preferably 35.0%, and most preferably 33.0%.

An Al₂O₃ component is an optional component having the effect of improving devitrification resistance and chemical durability. The lower limit of the content of the Al₂O₃ component is preferably more than 0%, more preferably 1.0%, still more preferably 3.0%, and still more preferably 5.0%.

In particular, at a content of the Al₂O₃ component of 8.0% or more, devitrification resistance can be significantly improved when the content of the Ln₂O₃ component is high. Accordingly, the lower limit of the content of the Al₂O₃ component is preferably 8.0%, more preferably 10.0%, still more preferably 12.0%, still more preferably 14.0%, and most preferably 16.0%.

On the other hand, when the content of the Al₂O₃ component is 30.0% or less, deterioration of devitrification resistance and a decrease in the refractive index due to excessive incorporation can be suppressed. Accordingly, the upper limit of the content of the Al₂O₃ component is preferably 30.0%, more preferably 28.0%, still more preferably 26.0%, still more preferably 24.0%, still more preferably 22.0%, still more preferably 20.0%, and most preferably 18.0%.

A La₂O₃ component is an optional component that increases the refractive index of the glass and that increases the Abbe number of the glass when contained in an amount of more than 0%. Accordingly, the lower limit of the content of the La₂O₃ component is preferably more than 0%, more preferably 5.0%, still more preferably 10.0%, still more preferably 15.0%, still more preferably 20.0%, and most preferably 25.0%.

On the other hand, when the content of the La₂O₃ component is 55.0% or less, stability of the glass can be enhanced to suppress devitrification. Accordingly, the upper limit of the content of the La₂O₃ component is preferably 55.0%, more preferably 45.0%, still more preferably 40.0%, and most preferably 35.0%.

An Y₂O₃ component is an optional component that can reduce the material cost of the glass and that can reduce the specific gravity of the glass compared with other rare earth components while maintaining a high refractive index and a high Abbe number when contained in an amount of more than 0%. Accordingly, the lower limit of the content of the Y₂O₃ component is preferably more than 0%, more preferably 1.0%, still more preferably 3.0%, still more preferably 5.0%, and most preferably 8.0%.

On the other hand, when the content of the Y₂O₃ component is 55.0% or less, devitrification resistance of the glass can be enhanced. Accordingly, the upper limit of the content of the Y₂O₃ component is preferably 55.0%, more preferably 45.0%, still more preferably 40.0%, still more preferably 30.0%, still more preferably 25.0%, and most preferably 20.0%.

A Gd₂O₃ component is an optional component that can increase the refractive index of the glass and that can increase the Abbe number when contained in an amount of more than 0%.

On the other hand, when the Gd₂O₃ component, which is expensive among rare earth elements, is 40.0% or less, an increase in the specific gravity is suppressed, the material cost of the glass is reduced, and thus the optical glass can be produced at a lower cost. Accordingly, the upper limit of the content of the Gd₂O₃ component is preferably 40.0%, more preferably 35.0%, still more preferably 30.0%, and still more preferably 25.0%.

In particular, when the Gd₂O₃ component is less than 10.0%, the material cost can be further reduced. Accordingly, the upper limit of the content of the Gd₂O₃ component is preferably less than 10.0%, more preferably less than 5.0%, still more preferably less than 1.0%, and still more preferably less than 0.1%. The Gd₂O₃ component may not be contained from the viewpoint of reducing the material cost and suppressing an increase in the specific gravity.

The Lu₂O₃ component is an optional component that can increase the refractive index of the glass and that can increase the Abbe number when contained in an amount of more than 0%.

On the other hand, when each content of the Lu₂O₃ component is 10.0% or less, the material cost of the glass is reduced, and thus the optical glass can be produced at a lower cost. Furthermore, devitrification resistance of the glass can be enhanced in this case. Accordingly, the upper limit of the content of the Lu₂O₃component is preferably 10.0%, more preferably 5.0%, still more preferably 3.0%, still more preferably 1.0%, and still more preferably 0.1%. The Lu₂O₃ component may not be contained from the viewpoint of reducing the material cost.

An Yb₂O₃ component is an optional component that can increase the refractive index of the glass and that can increase the Abbe number when contained in an amount of more than 0%.

On the other hand, when the content of the Yb₂O₃ component is 10.0% or less, the material cost of the glass is reduced, and thus the optical glass can be produced at a lower cost. Furthermore, devitrification resistance of the glass can be enhanced in this case. Accordingly, the upper limit of the content of the Yb₂O₃ component is preferably 10.0%, more preferably 5.0%, still more preferably 3.0%, still more preferably 1.0%, and still more preferably 0.1%. The Yb₂O₃ component may not be contained from the viewpoint of reducing the material cost.

A ZrO₂ component is an optional component that can increase the refractive index and the Abbe number of the glass and that can improve devitrification resistance when contained in an amount of more than 0%.

On the other hand, when the content of the ZrO₂ component is 10.0% or less, devitrification due to excessive incorporation of the ZrO₂ component can be suppressed. Accordingly, the upper limit of the content of the ZrO₂ component is preferably 10.0%, more preferably 8.0%, still more preferably 6.0%, still more preferably 4.0%, still more preferably 2.0%, still more preferably 1.0%, still more preferably 0.5%, and still more preferably 0.1%.

A TiO₂ component is an optional component that can increase the refractive index of the glass when contained in an amount of more than 0%.

On the other hand, when the content of the TiO₂ component is 10.0% or less, devitrification due to excessive incorporation of the TiO₂ component can be suppressed, and a decrease in the transmittance of visible light (in particular, having a wavelength of 500 nm or less) through the glass can be suppressed. Accordingly, the upper limit of the content of the TiO₂ component is preferably 10.0%, more preferably 8.0%, still more preferably 6.0%, still more preferably 4.0%, still more preferably 2.0%, still more preferably 1.0%, still more preferably 0.5%, and still more preferably 0.1%.

A Nb₂O₅ component is an optional component that can increase the refractive index of the glass when contained in an amount of more than 0%.
On the other hand, when the content of the Nb₂O₅ component is 15.0% or less, devitrification due to excessive incorporation of the Nb₂O₅ component can be suppressed, and a decrease in the transmittance of visible light (in particular, having a wavelength of 500 nm or less) through the glass can be suppressed. Accordingly, the upper limit of the content of the Nb₂O₅ component is preferably 15.0%, more preferably 12.0%, still more preferably 10.0%, still more preferably 8.0%, still more preferably 5.0%, still more preferably 3.0%, still more preferably 1.0%, still more preferably 0.5%, and still more preferably 0.1%.

A Ta₂O₅ component is an optional component that can increase the refractive index of the glass and that can enhance devitrification resistance when contained in an amount of more than 0%.

On the other hand, when the expensive Ta₂O₅ component is 10.0% or less, the material cost of the glass is reduced, and thus the optical glass can be produced at a lower cost. Accordingly, the upper limit of the content of the Ta₂O₅ component is preferably 10.0%, more preferably 5.0%, still more preferably 3.0%, still more preferably 1.0%, and still more preferably 0.1%. The Ta₂O₅ component may not be contained from the viewpoint of reducing the material cost.

A WO₃ component is an optional component that can increase the refractive index of the glass and that can enhance devitrification resistance when contained in an amount of more than 0%.

On the other hand, when the content of the WO₃ component is 10.0% or less, the visible light transmittance can be increased by reducing coloring of the glass due to the WO₃ component. Accordingly, the upper limit of the content of the WO₃ component is preferably 10.0%, more preferably 8.0%, still more preferably 6.0%, still more preferably 4.0%, still more preferably 1.0%, still more preferably 0.5%, and still more preferably 0.1%.

A ZnO component is an optional component that improves low-temperature meltability when contained in an amount of more than 0%.

On the other hand, when the content of the ZnO component is 40.0% or less, a decrease in the Abbe number and a decrease in devitrification resistance due to excessive incorporation can be suppressed. Accordingly, the upper limit of the content of the ZnO component is preferably 40.0%, more preferably 30.0%, still more preferably 20.0%, still more preferably 15.0%, still more preferably 10.0%, still more preferably 5.0%, still more preferably 3.0%, and most preferably 1.0%.

A MgO component is an optional component that improves low-temperature meltability when contained in an amount of more than 0%.

On the other hand, when the content of the MgO component is 20.0% or less, deterioration of chemical durability and a decrease in devitrification resistance due to excessive incorporation of the MgO component can be suppressed. Accordingly, the upper limit of the content of the MgO component is preferably 20.0%, more preferably 15.0%, still more preferably 10.0%, still more preferably 8.0%, still more preferably 5.0%, still more preferably 3.0%, and most preferably 1.0%.

A CaO component is an optional component that improves low-temperature meltability when contained in an amount of more than 0%.

On the other hand, when the content of the CaO component is 40.0% or less, deterioration of chemical durability and a decrease in devitrification resistance due to excessive incorporation of the CaO component can be suppressed. Accordingly, the upper limit of the content of the CaO component is preferably 40.0%, more preferably 30.0%, still more preferably 20.0%, still more preferably 15.0%, still more preferably 10.0%, still more preferably 5.0%, still more preferably 3.0%, and most preferably 1.0%.

A SrO component is an optional component that improves low-temperature meltability when contained in an amount of more than 0%.

On the other hand, when the content of the SrO component is 40.0% or less, deterioration of chemical durability and a decrease in devitrification resistance due to excessive incorporation of the SrO component can be suppressed. Accordingly, the upper limit of the content of the SrO component is preferably 40.0%, more preferably 30.0%, still more preferably 20.0%, still more preferably 15.0%, still more preferably 10.0%, still more preferably 5.0%, still more preferably 3.0%, and most preferably 1.0%.

A BaO component is an optional component that improves low-temperature meltability when contained in an amount of more than 0%.

On the other hand, when the content of the BaO component is 40.0% or less, deterioration of chemical durability and a decrease in devitrification resistance due to excessive incorporation of the BaO component can be suppressed. Accordingly, the upper limit of the content of the BaO component is preferably 40.0%, more preferably 30.0%, still more preferably 20.0%, still more preferably 15.0%, still more preferably 10.0%, still more preferably 5.0%, still more preferably 3.0%, and most preferably 1.0%.

A Li₂O component is an optional component that improves low-temperature meltability.

On the other hand, when the content of the Li₂O component is 8.0% or less, deterioration of chemical durability due to excessive incorporation of the Li₂O component can be suppressed. Accordingly, the upper limit of the content of the Li₂O component is preferably 8.0%, more preferably 6.0%, still more preferably 5.0%, still more preferably 4.0%, still more preferably 3.0%, still more preferably 2.0%, and most preferably 1.0%.

A Na₂O component is an optional component that improves low-temperature meltability.

On the other hand, when the content of the Na₂O component is 8.0% or less, deterioration of chemical durability due to excessive incorporation of the Na₂O component can be suppressed. Accordingly, the upper limit of the content of the Na₂O component is preferably 8.0%, more preferably 6.0%, still more preferably 4.0%, still more preferably 2.0%, still more preferably 1.0%, and most preferably 0.1%.

A K₂O component is an optional component that improves low-temperature meltability.

On the other hand, when the content of the K₂O component is 8.0% or less, deterioration of chemical durability due to excessive incorporation of the K₂O component can be suppressed. Accordingly, the upper limit of the content of the K₂O component is preferably 8.0%, more preferably 6.0%, still more preferably 4.0%, still more preferably 2.0%, still more preferably 1.0%, and most preferably 0.1%.

A GeO₂ component is an optional component that can increase the refractive index of the glass and that can improve devitrification resistance when contained in an amount of more than 0%.

However, since the material cost of GeO₂ is high, the production cost increases at a high content of GeO₂. Accordingly, the upper limit of the content of the GeO₂ component is preferably 10.0%, more preferably 5.0%, still more preferably 3.0%, still more preferably 1.0%, and still more preferably 0.1%. The GeO₂ component may not be contained from the viewpoint of reducing the material cost.

A Ga₂O₃ component is an optional component that can increase the refractive index of the glass and that can improve devitrification resistance when contained in an amount of more than 0%.

However, since the material cost of Ga₂O₃ is high, the production cost increases at a high content of Ga₂O₃. Accordingly, the upper limit of the content of the GaO₂ component is preferably 10.0%, more preferably 5.0%, still more preferably 3.0%, still more preferably 1.0%, and still more preferably 0.1%. The Ga₂O₃ component may not be contained from the viewpoint of reducing the material cost.

A P₂O₅ component is an optional component that can decrease the liquidus temperature of the glass to enhance devitrification resistance when contained in an amount of more than 0%.

On the other hand, when the content of the P₂O₅ component is 30.0% or less, a decrease in chemical durability, in particular, water resistance of the glass can be suppressed. Accordingly, the upper limit of the content of the P₂O₅ component is preferably 30.0%, more preferably 20.0%, still more preferably 15.0%, still more preferably 10.0%, still more preferably 5.0%, still more preferably 1.0%, and the most preferably 0.1%.

A Bi₂O₃ component is an optional component that can increase the refractive index and that can decrease the glass transition point when contained in an amount of more than 0%.

On the other hand, when the content of the Bi₂O₃ component is 5.0% or less, coloring of the glass can be suppressed, and devitrification resistance can be enhanced. Accordingly, the upper limit of the content of the Bi₂O₃ component is preferably 5.0%, more preferably 3.0%, still more preferably 1.0%, and most preferably 0.1%.

A TeO₂ component is an optional component that can increase the refractive index and that can decrease the glass transition point when contained in an amount of more than 0%.

On the other hand, when glass raw materials are melted in a crucible made of platinum or in a melting tank in which a portion that comes in contact with a molten glass is formed of platinum, there may be a problem in that TeO₂ can form an alloy with platinum. Accordingly, the upper limit of the content of the TeO₂ component is preferably 5.0%, more preferably 3.0%, still more preferably 1.0%, and most preferably 0.1%.

A SnO₂ component is an optional component that can suppress oxidation of a molten glass to clarify the glass and that can increase the visible light transmittance of the glass when contained in an amount of more than 0%. On the other hand, when the content of the SnO₂ component is 3.0% or less, coloring of the glass due to reduction of the molten glass and devitrification of the glass can be suppressed. In addition, since alloying of melting equipment (in particular, a noble metal such as Pt) and the SnO₂ component is suppressed, the life of the melting equipment can be extended. Accordingly, the content of the SnO₂ component is preferably 3.0% or less, more preferably 1.0% or less, still more preferably 0.5% or less, and most preferably 0.1% or less.

An Sb₂O₃ component is an optional component that can deaerate a molten glass when contained in an amount of more than 0%.

On the other hand, when the amount of Sb₂O₃ is excessively large, the transmittance in a short-wavelength region of the visible-light region deteriorates. Accordingly, the upper limit of the content of the Sb₂O₃ component is preferably 1.0%, more preferably 0.7%, still more preferably 0.5%, still more preferably 0.2%, and most preferably 0.1%.

The component that clarifies and deaerates the glass is not limited to the Sb₂O₃ component. Known clarifiers or deaerating agents in the field of the glass production or combinations thereof can be used.

A F component is an optional component that can decrease the glass transition point and that can improve devitrification resistance while increasing the Abbe number of the glass when the F component is contained in an amount of more than 0%.

However, when the content of the F component, that is, a total amount of fluorides with which a part or the whole of one or two or more of the oxides of metal elements are replaced exceeds 15.0% in terms of F, the volatilization amount of the F component increases. Consequently, it becomes difficult to obtain stable optical constants and to obtain a homogeneous glass.

Accordingly, the upper limit content of the F component is preferably 15.0%, more preferably 12.0%, still more preferably 10.0%, still more preferably 5.0%, still more preferably 3.0%, and most preferably 1.0%.

The sum of the content (mass sum) of an RO component (where R represents at least one selected from the group consisting of Zn, Mg, Ca, Sr, and Ba) is preferably less than 40.0%. In this case, deterioration of chemical durability and a decrease in devitrification resistance due to excessive incorporation can be suppressed.

Accordingly, the upper limit of the mass sum of the RO component is preferably less than 40.0%, more preferably 38.0%, more preferably 30.0%, and still more preferably 20.0%.

In particular, when the content of the RO component is 10.0% or less, the effect of suppressing deterioration of chemical durability is more easily obtained. Accordingly, the upper limit of the content of the RO component is preferably 10.0%, more preferably 8.0%, still more preferably 5.0%, and most preferably 2.0%.

On the other hand, when this sum is more than 0%, the effect of improving meltability of the glass raw materials and the effect of suppressing an excessive increase in viscosity can be easily obtained. Accordingly, the lower limit of the mass sum of the RO component is preferably more than 0%, more preferably 0.5%, and still more preferably 1.0%.

In particular, when the Al₂O₃ component is contained in an amount of less than 8.0%, devitrification resistance is not sufficient. Therefore, devitrification resistance can be improved when the lower limit of the RO component is 2.0% or more. Accordingly, the lower limit of the RO component is preferably 2.0%, more preferably 3.0%, still more preferably 5.0%, still more preferably 10.0%, and still more preferably 15.0%.

When a mass sum (SiO₂ + Al₂O₃) is 5.0% or more, the effect of improving chemical durability of the glass is easily obtained.

Accordingly, the lower limit of the mass sum of (SiO₂ + Al₂O₃) is preferably 5.0%, more preferably 10.0%, still more preferably 12.0%, still more preferably 14.0%, still more preferably 16.0%, still more preferably 18.0%, still more preferably 20.0%, still more preferably 23.0%, and most preferably 25.0%.

On the other hand, when this mass sum is 50.0% or less, deterioration of meltability of the glass raw materials and an excessive increase in viscosity can be suppressed. Accordingly, the upper limit of the mass sum of (SiO₂ + Al₂O₃) is preferably 50.0%, more preferably 45.0%, still more preferably 40.0%, still more preferably 38.0%, still more preferably 35.0%, still more preferably 32.0%, and most preferably 30.0%.

When a mass ratio (SiO₂ + Al₂O₃)/(B₂O₃) is 0.3 or more, the effect of improving chemical durability of the glass is easily obtained. Accordingly, the lower limit of the mass ratio (SiO₂ + Al₂O₃)/(B₂O₃) is preferably 0.3, more preferably 0.4, still more preferably 0.5, still more preferably 0.6, still more preferably 0.7, and most preferably 0.8.

On the other hand, when this mass ratio is 10.0 or less, deterioration of meltability of the glass raw materials and an excessive increase in viscosity can be suppressed. Accordingly, the upper limit of the mass ratio of (SiO₂ + Al₂O₃)/(B₂O₃) is preferably 10.0, more preferably 8.0, still more preferably 6.0, still more preferably 5.0, still more preferably 4.0, still more preferably 3.0, still more preferably 2.0, and most preferably 1.0.

When the B₂O₃ component is not contained, the value of (SiO₂ + Al₂O₃)/(B₂O₃) is assumed to be infinite.

When a mass sum (ZrO₂ + TiO₂ + Nb₂O₅ + Ta₂O₅ + WO₃ + Bi₂O₃ + TeO₂) is 20.0%or less, the effect of improving devitrification resistance is easily obtained, and an excessive decrease in the Abbe number is suppressed to easily obtain a low-dispersion performance.

Accordingly, the mass sum of (ZrO₂ + TiO₂ + Nb₂O₅ + Ta₂O₅ + WO₃ + Bi₂O₃ + TeO₂) is preferably 20.0% or less, more preferably 15.0% or less, still more preferably 10.0% or less, still more preferably 5.0% or less, still more preferably 3.0% or less, still more preferably 1.0% or less, and most preferably 0.1% or less.

When a mass ratio (Ln₂O₃ + SiO₂ + Al₂O₃) / (RO + Rn₂O + B₂O₃) is 0.3 or more, the effect of improving chemical durability of the glass is easily obtained.

Accordingly, the lower limit of the mass ratio (Ln₂O₃ + SiO₂ + Al₂O₃)/(RO + Rn₂O + B₂O₃) is preferably 0.3, more preferably 0.5, still more preferably 0.8, still more preferably 1.2, still more preferably 1.4, still more preferably 1.6, still more preferably 1.8, and most preferably 2.0.

On the other hand, when this mass ratio is 10.0 or less, deterioration of meltability of the glass raw materials and an excessive increase in viscosity can be suppressed. Accordingly, the upper limit of the mass ratio of (Ln₂O₃ + SiO₂ + Al₂O₃) / (RO + Rn₂O + B₂O₃) is preferably 10.0, more preferably 8.0, still more preferably 7.0, still more preferably 6.0, still more preferably 5.0, still more preferably 4.0, still more preferably 3.0, and most preferably 2.5.

When the RO, Rn₂O, and B₂O₃ components are not contained, the value of (Ln₂O₃ + SiO₂ + Al₂O₃) / (RO + Rn₂O + B₂O₃) is assumed to be infinite.

When a mass product (BaO × Gd₂O₃) is less than 8.0, the effect of reducing both the specific gravity and the cost of the glass is easily obtained. Accordingly, the upper limit of the mass product (BaO × Gd₂O₃) is preferably less than 8.0, more preferably 7.0, still more preferably 6.0, still more preferably 5.0, still more preferably 4.0, still more preferably 3.0, still more preferably 2.0, still more preferably 1.0, and most preferably 0.1.

When a mass product (SiO₂ + Al₂O₃ + B₂O₃) × Rn₂O is 500 or less, the effect of improving durability of the glass while maintaining a high refractive index and a high Abbe number is easily obtained. Accordingly, the upper limit of the mass product of (SiO₂ + Al₂O₃ + B₂O₃) × Rn₂O is preferably 500, more preferably 450, still more preferably 400, still more preferably 350, still more preferably 300, still more preferably 250, still more preferably 200, still more preferably 150, and most preferably 100.

When a mass ratio (Al₂O₃/Ln₂O₃) is more than 0, the effect of improving devitrification resistance is easily obtained.

Accordingly, the lower limit of the mass ratio of (Al₂O₃/Ln₂O₃) may be preferably 0.10, more preferably 0.15, still more preferably 0.20, still more preferably 0.25, still more preferably 0.30, and most preferably 0.35.

On the other hand, when this mass ratio is 1.0 or less, deterioration of meltability of the glass raw materials and an excessive increase in viscosity can be suppressed. Accordingly, the upper limit of the mass ratio of (Al₂O₃/Ln₂O₃) is preferably 1.0 or less, more preferably 0.9, still more preferably 0.8, still more preferably 0.7, still more preferably 0.6, and most preferably 0.5.

### <With regard to components that should not be contained>

Components that should not be contained and components whose incorporation is undesirable in the optical glasses of the first embodiment and the second embodiment will be described.

Other components can be optionally added within a range that does not impair characteristics of each of the glasses of the present invention. However, preferably, except for Ti, Zr, Nb, W, La, Gd, Y, Yb, and Lu, transition metal components such as V, Cr, Mn, Fe, Co, Ni, Cu, Ag, and Mo are not substantially contained, in particular, in optical glasses used for wavelengths in the visible range. This is because even when the transition metal components are contained alone or in combination in a small amount, the glasses are colored and have properties of generating absorption in particular wavelengths in the visible range.

Desirably, a Nd₂O₃ component is not substantially contained, more specifically, is not contained at all except for inevitable mixing because the Nd₂O₃ component has a strong coloring effect on glasses.

Desirably, an Er₂O₃ component is not substantially contained, more specifically, is not contained at all except for inevitable mixing because the Er₂O₃ component has a strong coloring effect on glasses.

Desirably, lead compounds such as PbO are not substantially contained, more specifically, are not contained at all except for inevitable mixing because the lead compounds are components having high environmental loads.

Desirably, arsenic compounds such as As₂O₃ are not substantially contained, more specifically, are not contained at all except for inevitable mixing because the arsenic compounds are components having high environmental loads.

Furthermore, use of components of Th, Cd, Tl, Os, Be, and Se recently tends to be suppressed in terms of hazardous chemical substances, and environmental countermeasures are required not only for steps of producing a glass but also processing steps and disposal after commercialization of products. Thus, preferably, these components are not substantially contained in the case where the effects on the environment are considered to be serious.

### [Physical properties]

Physical properties of the first embodiment and the second embodiment optical glasses of the present invention will be described.

The optical glasses of the present invention each preferably have a medium refractive index and a high Abbe number (low dispersion). In particular, the lower limit of the refractive index (n_{d}) of the optical glass of the present invention is preferably 1.58, more preferably 1.60, still more preferably 1.61, still more preferably 1.62, still more preferably 1.63, and most preferably 1.64. The upper limit of this refractive index (n_{d}) is preferably 1.80, more preferably 1.75, still more preferably 1.70, and most preferably 1.68.

The lower limit of the Abbe number (v_{d}) of the optical glass of the present invention is preferably 35, more preferably 38, still more preferably 40, still more preferably 45, and most preferably 50. The upper limit of this Abbe number (v_{d}) is preferably 65. However, the upper limit of this Abbe number (v_{d}) is preferably 64, more preferably 63, still more preferably 62, still more preferably 61, and most preferably 60.

With such a medium refractive index, a large amount of light refraction can be obtained even when the thickness of an optical element is reduced. In addition, since the optical glass has such a low dispersion, a deviation of the focal point due to the wavelength of light (chromatic aberration) can be reduced when the optical glass is used as a single lens. Accordingly, for example, when an optical system is formed by using an optical element having a high dispersion (low Abbe number) in combination, the aberration is reduced as a whole of the optical system, and high imaging characteristics and the like can be realized. As described above, the optical glass of the present invention is useful in terms of optical design. In particular, when the optical glass forms an optical system, a reduction in the size of the optical system can be realized, and the degree of freedom of the optical design can be increased while realizing high imaging characteristics and the like.

Here, the refractive index (nd) and the Abbe number (vd) of the optical glass of the present invention preferably satisfy the relationships of nd ≥ -0.0023 × vd + 1.73, 1.58 ≤ nd ≤ 1.80, and 35 ≤ vd ≤ 65.

When the refractive index (nd) and the Abbe number (vd) of a glass having a composition specified in the present invention satisfy the above relationships, a more stable glass is obtained.

On the other hand, the refractive index (nd) and the Abbe number (vd) more preferably satisfy the relationships of nd ≥ -0.0023 × vd + 1.74, 1.60 ≤ nd ≤ 1.75, and 45 ≤ vd ≤ 62.5. The refractive index (nd) and the Abbe number (vd) still more preferably satisfy the relationships of nd ≥ -0.0023 × vd + 1.75, 1.62 ≤ nd ≤ 1.71, and 50 ≤ vd ≤ 60.

The optical glass of the present invention preferably has a low specific gravity. More specifically, the specific gravity of the optical glass of the present invention is 5.00 or less. Thus, the masses of an optical element and an optical device including the optical element are reduced, which can contribute to a reduction in the weight of optical devices. Accordingly, the upper limit of the specific gravity of the optical glass of the present invention is preferably 5.00, more preferably 4.70, and preferably 4.50. Note that the specific gravity of the optical glass of the present invention is often generally 2.80 or more, more specifically 3.00 or more, more specifically 3.10 or more, and still more specifically 3.20 or more.
The specific gravity of the optical glass of the present invention is measured on the basis of the Japan Optical Glass Manufacturers' Association standard JOGIS05-1975 "Measuring Method for Specific Gravity of Optical Glass".

The optical glass of the present invention preferably has high acid resistance. In particular, chemical durability (acid resistance) of a glass determined by the powder method in accordance with JOGIS06-2009 is preferably Class 1 to Class 4 and more preferably Class 1 to Class 3. In this case, processability of the optical glass improves, and glass fogging due to acid rain or the like is reduced when the optical glass is used in, for example, vehicle applications. Thus, an optical element can be more easily produced from the glass.

Herein, the "acid resistance" refers to durability of a glass to corrosion by an acid. This acid resistance can be measured in accordance with the Japan Optical Glass Manufacturers' Association standard "Measuring Method for Chemical Durability of Optical Glass" JOGIS06-1999. The phrase "chemical durability (acid resistance) determined by the powder method is Class 1 to Class 3" means that chemical durability (acid resistance) determined in accordance with JOGIS06-2009 is less than 0.65 mass% in terms of the rate of decrease in the sample mass before and after the measurement.

In "Class 1" of chemical durability (acid resistance), the rate of decrease in the sample mass before and after the measurement is less than 0.20 mass%. In "Class 2", the rate of decrease in the sample mass before and after the measurement is 0.20 mass% or more and less than 0.35 mass%. In "Class 3", the rate of decrease in the sample mass before and after the measurement is 0.35 mass% or more and less than 0.65 mass%. In "Class 4", the rate of decrease in the sample mass before and after the measurement is 0.65 mass% or more and less than 1.20 mass%. In "Class 5", the rate of decrease in the sample mass before and after the measurement is 1.20 mass% or more and less than 2.20 mass%. In "Class 6", the rate of decrease in the sample mass before and after the measurement is 2.20 mass% or more.

Preferably, the optical glass of the present invention has high devitrification resistance, more specifically, has a low liquidus temperature.

That is, the upper limit of the liquidus temperature of the optical glass of the present invention is preferably 1200°C, more preferably 1150°C, and still more preferably 1100°C. In this case, even when a glass after melting is allowed to flow out at a lower temperature, crystallization of the produced glass is suppressed. Therefore, devitrification when a glass is formed from a molten state can be suppressed to reduce the effect on optical properties of an optical element that uses the glass. In addition, a glass can be formed even when the melting temperature of the glass is decreased. Therefore, the production cost of the glass can be reduced by reducing energy consumed during the formation of the glass.

On the other hand, the lower limit of the liquidus temperature of the optical glass of the present invention is not particularly limited. However, the liquidus temperature of the glass obtained by the present invention is often generally 800°C or higher, specifically 850°C or higher, and more specifically, 900°C or higher. The term "liquidus temperature" used in this specification refers to the lowest temperature at which crystals are not observed when a glass is maintained in a temperature gradient furnace having a temperature gradient of 1000°C to 1150°C for 30 minutes, removed from the furnace to the outside, and cooled, and the presence or absence of crystals is then observed with a microscope at a magnification of 100.

In particular, the optical glass of the second embodiment preferably has a low product (d × RA) of the specific gravity (d) of the glass and the class (RA) of the powder method acid resistance. More specifically, the product (d × RA) in the present invention is 15.0 or less.

In this case, a lens having a low specific gravity while having good acid resistance can be produced. Therefore, a reduction in the weight suitable for, for example, applications to vehicle-mounted cameras and monitoring cameras and a production of an optical element having resistance to, for example, acid rain can be easily performed.

Accordingly, the upper limit of the product (d × RA) in the present invention is preferably 15.0, more preferably 14.0, still more preferably 13.0, still more preferably 12.0, still more preferably 11.0, still more preferably 10.5, and most preferably 10.0.

The lower limit of the product (d × RA) of the optical glass of the present invention is not particularly limited but is often generally 3.0 or more, more specifically 5.0 or more, and still more specifically 6.5 or more.

### [Production method]

An optical glass of the present invention is produced, for example, as described below. Specifically, the optical glass of the present invention is produced by uniformly mixing the raw materials described above such that each component has a content in a predetermined range, charging the prepared mixture in a platinum crucible, melting the mixture in an electric furnace in a temperature range of 1100°C to 1340°C for 2 to 6 hours in accordance with the degree of difficulty in melting of the glass composition, homogenizing the molten mixture by stirring, subsequently decreasing the temperature to an appropriate temperature, casting the molten mixture in a metal mold, and performing annealing.

### [Formation of glass]

The glass of the present invention can be dissolved and formed by a known method. Means for forming a glass melt is not limited.

### [Glass formed body and optical element]

The glass of the present invention can be formed into a glass formed body by using, for example, means such as grinding and polishing processes. Specifically, a glass formed body can be produced by subjecting the glass to machining such as grinding and polishing. The means for producing the glass formed body are not limited to the above means.

As described above, a glass formed body formed from the glass of the present invention has good durability and thus has good processability, and deterioration of the glass due to acid rain and the like is small. Thus, the glass formed body can be used in, for example, vehicle applications.

### EXAMPLES

Tables 1 to 12 show compositions of glasses of Examples of the present invention and Comparative Examples, the refractive index (n_{d}) , the Abbe number (v_{d}), the specific gravity (d), the class (RA) of the powder method acid resistance, and the liquidus temperature of each of the glasses. Examples described below are merely illustrative, and the present invention is not limited only to these Examples. Tables 1 to 11 show optical glasses of the first embodiment, and Tables 12 to 28 show optical glasses of the second embodiment.

The glasses of Examples of the present invention and Comparative Examples were each produced by selecting high-purity raw materials used in typical optical glasses, such as an oxide, a hydroxide, a carbonate, a nitrate, a fluoride, a hydroxide, and a metaphosphoric acid compound corresponding to raw materials of respective components, weighing the raw materials so as to have a ratio of the composition of each of the Examples shown in the tables, uniformly mixing the raw materials, subsequently charging the resulting mixture in a platinum crucible, melting the mixture in an electric furnace in a temperature range of 1100°C to 1350°C for 2 to 5 hours in accordance with the degree of difficulty in melting of the glass composition, subsequently homogenizing the molten mixture by stirring, subsequently casting the mixture in a metal mold or the like, and performing annealing.

Here, the refractive index and the Abbe number of each of the glasses of Examples and Comparative Examples were measured on the basis of the Japan Optical Glass Manufacturers' Association standard JOGIS01-2003. Here, the refractive index and the Abbe number were measured by using a glass obtained at an annealing temperature-decreasing rate of -25 °C/hr.

The specific gravity of each of the glasses of Examples and Comparative Examples was measured on the basis of the Japan Optical Glass Manufacturers' Association standard JOGIS05-1975 "Measuring Method for Specific Gravity of Optical Glass".

The acid resistance of each of the glasses of Examples and Comparative Examples was measured in accordance with the Japan Optical Glass Manufacturers' Association standard "Measuring Method for Chemical Durability of Optical Glass" JOGIS06-1999. Specifically, a glass sample ground to have a grain size of 425 to 600 µm was put in a specific gravity bottle and placed in a platinum basket. The platinum basket was placed in a quartz glass round-bottom flask containing a 0.01 N aqueous solution of nitric acid therein and treated in a boiling water bath for 60 minutes. The rate of decrease (mass%) of the glass sample after the treatment was calculated. When the rate of decrease (mass%) was less than 0.20, the sample was rated as Class 1. When the rate of decrease was 0.20 or more and less than 0.35, the sample was rated as Class 2. When the rate of decrease was 0.35 or more and less than 0.65, the sample was rated as Class 3. When the rate of decrease was 0.65 or more and less than 1.20, the sample was rated as Class 4. When the rate of decrease was 1.20 or more and less than 2.20, the sample was rated as Class 5. When the rate of decrease was 2.20 or more, the sample was rated as Class 6. Here, a smaller number of the class means better acid resistance of the glass.

The liquidus temperature of each of the glasses of Examples and Comparative Examples was determined as the lowest temperature at which crystals were not observed when the glass was maintained in a temperature gradient furnace having a temperature gradient of 1000°C to 1150°C for 30 minutes, removed from the furnace to the outside, and cooled, and the presence or absence of crystals was then observed with a microscope at a magnification of 100. Note that the description of "1000°C or lower" means that crystals are not observed at at least 1000°C.

**[Table 1]**

| (Unit: mass%) | Example | | | | | | | |
|---|---|---|---|---|---|---|---|---|
| | 1-1 | 1-2 | 1-3 | 1-4 | 1-5 | 1-6 | 1-7 | 1-8 |
| SiO₂ | 25.0 | 29.6 | 26.0 | 26.0 | 26.0 | 21.0 | 16.0 | 16.0 |
| B₂O₃ | 12.0 | 12.0 | 12.0 | 12.0 | 12.0 | 17.0 | 22.0 | 23.0 |
| Al₂O₃ | 10.0 | 11.5 | 22.0 | 17.0 | 20.0 | 17.0 | 17.0 | 17.0 |
| La₂O₃ | 24.5 | 29.0 | 27.0 | 30.0 | 27.0 | 30.0 | 30.0 | 30.0 |
| Y₂O₃ | 10.0 | | 12.0 | 14.0 | 14.0 | 14.0 | 14.0 | 14.0 |
| Gd₂O₃ | | | | | | | | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| CaO | 14.0 | | | | | | | |
| SrO | | 4.9 | | | | | | |
| BaO | 3.5 | 13.0 | | | | | | |
| Li₂O | 1.0 | | 1.0 | 1.0 | 1.0 | 1.0 | 1.0 | |
| Sb₂O₃ | | | | 0.02 | 0.02 | | | |
| TOTAL | 100.0 | 100.0 | 100.0 | 100.0 | 100.0 | 100.0 | 100.0 | 100.0 |
| Ln₂O₃ | 34.50 | 29.00 | 39.00 | 44.00 | 41.00 | 44.00 | 44.00 | 44.00 |
| RO | 17.50 | 17.90 | 0.00 | 0.00 | 0.00 | 0.00 | 0.00 | 0.00 |
| Rn₂O | 1.00 | 0.00 | 1.00 | 1.00 | 1.00 | 1.00 | 1.00 | 0.00 |
| (SiO₂ + Al₂O₃)/B₂O₃ | 2.92 | 3.43 | 4.00 | 3.59 | 3.84 | 2.24 | 1.50 | 1.43 |
| SiO₂ + Al₂O₃ | 35.00 | 41.10 | 48.00 | 43.00 | 46.00 | 38.00 | 33.00 | 33.00 |
| Al₂O₃/Ln₂O₃ | 0.29 | 0.40 | 0.56 | 0.39 | 0.49 | 0.39 | 0.39 | 0.39 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.28 | 2.34 | 6.69 | 6.70 | 6.70 | 4.56 | 3.35 | 3.35 |
| Ln₂O₃/RO | 1.97 | 1.62 | | | | | | |
| Ln₂O₃/Rn₂O | 34.50 | | 39.00 | 44.00 | 41.00 | 44.00 | 44.00 | |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 47.00 | 0.00 | 60.00 | 54.98 | 57.98 | 55.00 | 55.00 | 0.00 |
| nd | 1.67 | 1.63 | 1.64 | 1.65 | 1.65 | 1.66 | 1.66 | 1.66 |
| vd | 54.1 | 56.8 | 54.9 | 54.6 | 54.9 | 55.0 | 55.4 | 55.3 |
| Specific gravity (d) | 3.51 | 3.62 | 3.31 | 3.44 | 3.36 | 3.43 | 3.43 | 3.43 |
| Powder method acid resistance (RA) | 3 | 4 | 2 | 2 | 2 | 2 | 3 | 3 |
| Liquidus temperature | | | | 1147 | | 1112 | 1085 | 1000 or lower |

**[Table 2]**

| (Unit: mass%) | Example | | | | | | | |
|---|---|---|---|---|---|---|---|---|
| | 1-9 | 1-10 | 1-11 | 1-12 | 1-13 | 1-14 | 1-15 | 1-16 |
| SiO₂ | 16.0 | 10.0 | 10.0 | 13.0 | 10.0 | 10.0 | 10.0 | 10.0 |
| B₂O₃ | 27.0 | 32.0 | 28.0 | 28.0 | 32.0 | 32.0 | 32.0 | 32.0 |
| Al₂O₃ | 15.0 | 17.0 | 17.0 | 14.0 | 17.0 | 17.0 | 17.0 | 17.0 |
| La₂O₃ | 27.0 | 28.0 | 28.0 | 28.0 | 25.0 | 22.0 | 31.0 | 34.0 |
| Y₂O₃ | 14.0 | 12.0 | 12.0 | 12.0 | 15.0 | 18.0 | 9.0 | 6.0 |
| Gd₂O₃ | | | | | | | | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| CaO | | | | | | | | |
| SrO | | | | | | | | |
| BaO | | | | | | | | |
| Li₂O | 1.0 | 1.0 | 5.0 | 5.0 | 1.0 | 1.0 | 1.0 | 1.0 |
| Sb₂O₃ | | | | | 0.02 | 0.02 | 0.02 | 0.02 |
| TOTAL | 100.0 | 100.0 | 100.0 | 100.0 | 100.0 | 100.0 | 100.0 | 100.0 |
| Ln₂O₃ | 41.00 | 40.00 | 40.00 | 40.00 | 40.00 | 40.00 | 40.00 | 40.00 |
| RO | 0.00 | 0.00 | 0.00 | 0.00 | 0.00 | 0.00 | 0.00 | 0.00 |
| Rn₂O | 1.00 | 1.00 | 5.00 | 5.00 | 1.00 | 1.00 | 1.00 | 1.00 |
| (SiO₂ + Al₂O₃)/B₂O₃ | 1.15 | 0.84 | 0.96 | 0.96 | 0.84 | 0.84 | 0.84 | 0.84 |
| SiO₂ + Al₂O₃ | 31.00 | 27.00 | 27.00 | 27.00 | 27.00 | 27.00 | 27.00 | 27.00 |
| Al₂O₃/Ln₂O₃ | 0.37 | 0.43 | 0.43 | 0.35 | 0.43 | 0.43 | 0.43 | 0.43 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.57 | 2.03 | 2.03 | 2.03 | 2.03 | 2.03 | 2.03 | 2.03 |
| Ln₂O₃/RO | | | | | | | | |
| Ln₂O₃/Rn₂O | 41.00 | 40.00 | 8.00 | 8.00 | 40.00 | 40.00 | 40.00 | 40.00 |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 58.00 | 59.00 | 275.00 | 275.00 | 59.00 | 59.00 | 59.00 | 59.00 |
| nd | 1.65 | 1.64 | 1.65 | 1.65 | 1.65 | 1.65 | 1.64 | 1.64 |
| vd | 55.9 | 56.4 | 55.4 | 55.9 | 56.5 | 56.5 | 56.3 | 56.3 |
| Specific gravity (d) | 3.30 | 3.27 | 3.26 | 3.25 | 3.27 | 3.26 | 3.27 | 3.30 |
| Powder method acid resistance (RA) | 3 | 3 | 3 | 3 | 3 | 3 | 3 | 3 |
| Liquidus temperature | | 1004 | | | 1074 | 1113 | 1000 or lower | 1000 or lower |

**[Table 3]**

| (Unit: mass%) | Example | | | | | | | |
|---|---|---|---|---|---|---|---|---|
| | 1-17 | 1-18 | 1-19 | 1-20 | 1-21 | 1-22 | 1-23 | 1-24 |
| SiO₂ | 10.0 | 10.0 | 10.0 | | 10.0 | 10.0 | 10.0 | 10.0 |
| B₂O₃ | 32.0 | 32.0 | 32.0 | 42.0 | 32.0 | 26.0 | 32.0 | 32.0 |
| Al₂O₃ | 17.0 | 17.0 | 17.0 | 17.0 | 17.0 | 23.0 | 17.0 | 27.0 |
| La₂O₃ | 37.0 | 40.0 | 19.0 | 24.0 | | 24.0 | 10.0 | 18.0 |
| Y₂O₃ | 3.0 | | | 16.0 | 40.0 | 16.0 | | 12.0 |
| Gd₂O₃ | | | 21.0 | | | | 30.0 | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| CaO | | | | | | | | |
| SrO | | | | | | | | |
| BaO | | | | | | | | |
| Li₂O | 1.0 | 1.0 | 1.0 | 1.0 | 1.0 | 1.0 | 1.0 | 1.0 |
| Sb₂O₃ | 0.02 | 0.02 | | | | | | |
| TOTAL | 100.0 | 100.0 | 100.0 | 100.0 | 100.0 | 100.0 | 100.0 | 100.0 |
| Ln₂O₃ | 40.00 | 40.00 | 40.00 | 40.00 | 40.00 | 40.00 | 40.00 | 30.00 |
| RO | 0.00 | 0.00 | 0.00 | 0.00 | 0.00 | 0.00 | 0.00 | 0.00 |
| Rn₂O | 1.00 | 1.00 | 1.00 | 1.00 | 1.00 | 1.00 | 1.00 | 1.00 |
| (SiO₂ + Al₂O₃)/B₂O₃ | 0.84 | 0.84 | 0.84 | 0.40 | 0.84 | 1.27 | 0.84 | 1.16 |
| SiO₂ + Al₂O₃ | 27.00 | 27.00 | 27.00 | 17.00 | 27.00 | 33.00 | 27.00 | 37.00 |
| Al₂O₃/Ln₂O₃ | 0.43 | 0.43 | 0.43 | 0.43 | 0.43 | 0.58 | 0.43 | 0.90 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.03 | 2.03 | 2.03 | 1.33 | 2.03 | 2.70 | 2.03 | 2.03 |
| Ln₂O₃/RO | | | | | | | | |
| Ln₂O₃/Rn₂O | 40.00 | 40.00 | 40.00 | 40.00 | 40.00 | 40.00 | 40.00 | 30.00 |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 59.00 | 59.00 | 59.00 | 59.00 | 59.00 | 59.00 | 59.00 | 69.00 |
| nd | 1.64 | 1.64 | 1.64 | 1.65 | 1.65 | 1.65 | 1.63 | 1.62 |
| vd | 56.4 | 56.4 | 56.4 | 56.8 | 56.3 | 55.6 | 56.6 | 57.4 |
| Specific gravity (d) | 3.31 | 3.32 | 3.44 | 3.25 | 3.20 | 3.32 | 3.40 | 3.02 |
| Powder method acid resistance (RA) | 3 | 3 | 3 | 4 | 3 | 3 | 3 | 3 |
| Liquidus temperature | 1000 or lower | 1026 | | | | | | |

**[Table 4]**

| (Unit: mass%) | Example | | | | | | | |
|---|---|---|---|---|---|---|---|---|
| | 1-25 | 1-26 | 1-27 | 1-28 | 1-29 | 1-30 | 1-31 | 1-32 |
| SiO₂ | 20.0 | 10.0 | 10.0 | 10.0 | 10.0 | 10.0 | 10.0 | 10.0 |
| B₂O₃ | 32.0 | 27.0 | 32.0 | 32.0 | 32.0 | 32.0 | 32.0 | 32.0 |
| Al₂O₃ | 17.0 | 17.0 | 17.0 | 17.0 | 17.0 | 17.0 | 17.0 | 17.0 |
| La₂O₃ | 18.0 | 27.0 | 21.0 | 21.0 | 22.0 | 22.0 | 22.0 | 22.0 |
| Y₂O₃ | 12.0 | 18.0 | 14.0 | 14.0 | 14.0 | 14.0 | 14.0 | 14.0 |
| Gd₂O₃ | | | | | | | | |
| ZrO₂ | | | 5.0 | | | | | |
| TiO₂ | | | | 5.0 | | | | |
| Nb₂O₅ | | | | | 5.0 | | | |
| Ta₂O₅ | | | | | | | 5.0 | |
| WO₃ | | | | | | 5.0 | | |
| ZnO | | | | | | | | 5.0 |
| CaO | | | | | | | | |
| SrO | | | | | | | | |
| BaO | | | | | | | | |
| Li₂O | 1.0 | 1.0 | 1.0 | 1.0 | | | | |
| Sb₂O₃ | | | | | | | | |
| TOTAL | 100.0 | 100.0 | 100.0 | 100.0 | 100.0 | 100.0 | 100.0 | 100.0 |
| Ln₂O₃ | 30.00 | 45.00 | 35.00 | 35.00 | 36.00 | 36.00 | 36.00 | 36.00 |
| RO | 0.00 | 0.00 | 0.00 | 0.00 | 0.00 | 0.00 | 0.00 | 5.00 |
| Rn₂O | 1.00 | 1.00 | 1.00 | 1.00 | 0.00 | 0.00 | 0.00 | 0.00 |
| (SiO₂ + Al₂O₃)/B₂O₃ | 1.16 | 1.00 | 0.84 | 0.84 | 0.84 | 0.84 | 0.84 | 0.84 |
| SiO₂ + Al₂O₃ | 37.00 | 27.00 | 27.00 | 27.00 | 27.00 | 27.00 | 27.00 | 27.00 |
| Al₂O₃/Ln₂O₃ | 0.57 | 0.38 | 0.49 | 0.49 | 0.47 | 0.47 | 0.47 | 0.47 |
| ZrO₂ + TiO₂ + Nb₂O₅ + Ta₂O₅ + WO₃ + Bi₂O₃ + TeO₂ | 0.00 | 0.00 | 5.00 | 5.00 | 5.00 | 5.00 | 5.00 | 0.00 |
| (Ln₂O₃ + SiO₂ + Al₂O₃)/(RO + Rn₂O + B₂O₃) | 2.03 | 2.57 | 1.88 | 1.88 | 1.97 | 1.97 | 1.97 | 1.70 |
| Ln₂O₃/RO | | | | | | | | 7.20 |
| Ln₂O₃/Rn₂O | 30.00 | 45.00 | 35.00 | 35.00 | | | | |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 69.00 | 54.00 | 59.00 | 59.00 | 0.00 | 0.00 | 0.00 | 0.00 |
| nd | 1.60 | 1.67 | 1.65 | 1.66 | 1.66 | 1.64 | 1.65 | 1.65 |
| vd | 58.9 | 55.8 | 53.2 | 52.1 | 52.4 | 53.3 | 53.2 | 56.2 |
| Specific gravity (d) | 2.94 | 3.43 | 3.24 | 3.19 | 3.27 | 3.28 | 3.31 | 3.30 |
| Powder method acid resistance (RA) | 3 | 3 | 3 | 3 | 3 | 3 | 3 | 3 |
| Liquidus temperature | | | | 1000 or lower | | | | 1000 or lower |

**[Table 5]**

| (Unit: mass%) | Example | | | | Comparative Example |
|---|---|---|---|---|---|
| | 1-33 | 1-34 | 1-35 | 1-36 | A |
| SiO₂ | 10.0 | 10.0 | 9.5 | 10.0 | 20.0 |
| B₂O₃ | 26.5 | 32.0 | 31.1 | 31.7 | 22.4 |
| Al₂O₃ | 17.0 | 17.0 | 17.0 | 17.0 | |
| La₂O₃ | 28.0 | | 25.0 | 33.3 | 5.5 |
| Y₂O₃ | 6.0 | 15.0 | 17.0 | 8.0 | |
| Gd₂O₃ | | 25.0 | | | |
| ZrO₂ | 5.5 | | | | 1.5 |
| TiO₂ | 6.0 | | | | |
| Nb₂O₅ | | | | | |
| Ta₂O₅ | | | | | |
| WO₃ | | | | | |
| ZnO | | | | | 1.0 |
| CaO | | | | | 0.5 |
| SrO | | | | | |
| BaO | | | | | 49.0 |
| Li₂O | 1.0 | 1.0 | 0.4 | | |
| Sb₂O₃ | | | | 0.04 | 0.1 |
| TOTAL | 100.0 | 100.0 | 100.0 | 100.0 | 100.0 |
| Ln₂O₃ | 34.00 | 40.00 | 42.00 | 41.30 | 5.50 |
| RO | 0.00 | 0.00 | 0.00 | 0.00 | 50.50 |
| Rn₂O | 1.00 | 1.00 | 0.40 | 0.00 | 0.00 |
| (SiO₂ + Al₂O₃)/B₂O₃ | 1.02 | 0.84 | 0.85 | 0.85 | 0.89 |
| SiO₂ + Al₂O₃ | 27.00 | 27.00 | 26.50 | 27.00 | 20.00 |
| Al₂O₃/Ln₂O₃ | 0.50 | 0.43 | 0.40 | 0.41 | 0.00 |
| ZrO₂ + TiO₂ + Nb₂O₅ + Ta₂O₅ + WO₃ + Bi₂O₃ + TeO₂ | 11.50 | 0.00 | 0.00 | 0.00 | 1.50 |
| (Ln₂O₃ + SiO₂ + Al₂O₃)/(RO + Rn₂O + B₂O₃) | 2.22 | 2.03 | 2.17 | 2.16 | 0.35 |
| Ln₂O₃/RO | | | | | |
| Ln₂O₃/Rn₂O | 34.00 | 40.00 | 105.0 | | |
| BaO × Gd₂O₃ | 0.00 | 0.00 | 0.00 | 0.00 | 0.00 |
| (SiO₂ + B₂O₃ + Al₂O₃) × Rn₂O | 53.50 | 59.00 | 23.04 | 0.00 | 0.00 |
| nd | 1.69 | 1.63 | 1.65 | 1.65 | 1.65 |
| vd | 45.4 | 57.3 | 56.3 | 56.2 | 56.5 |
| Specific gravity (d) | 3.38 | 3.33 | 3.33 | 3.35 | 3.85 |
| Powder method acid resistance (RA) | 3 | 3 | 3 | 3 | 5 |
| Liquidus temperature | | | | 1000 or lower | |

**[Table 6]**

| (Unit: mass%) | Example | | | | | | | |
|---|---|---|---|---|---|---|---|---|
| | 1-37 | 1-38 | 1-39 | 1-40 | 1-41 | 1-42 | 1-43 | 1-44 |
| SiO₂ | 10.0 | 10.0 | 10.8 | 11.0 | 10.0 | 10.0 | 10.0 | 10.0 |
| B₂O₃ | 31.4 | 31.1 | 29.9 | 30.2 | 35.0 | 30.0 | 31.0 | 31.0 |
| Al₂O₃ | 17.0 | 17.0 | 16.8 | 16.8 | 15.0 | 15.0 | 11.0 | 11.0 |
| La₂O₃ | 33.3 | 33.0 | 33.0 | 32.7 | 20.0 | 20.0 | 36.5 | 36.0 |
| Y₂O₃ | 8.3 | 8.0 | 8.0 | 8.3 | 5.0 | 5.0 | 10.5 | 10.0 |
| Gd₂O₃ | | | | | | | | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| MgO | | | | | 15.0 | | | |
| CaO | | | | 1.0 | | 20.0 | | 2.0 |
| SrO | | | | | | | | |
| BaO | | | 1.5 | | | | | |
| Li₂O | | 0.8 | | | | | 1.0 | |
| Sb₂O₃ | 0.0 | 0.1 | 0.1 | 0.1 | | | | |
| TOTAL | 100.0 | 100.0 | 100.1 | 100.1 | 100.0 | 100.0 | 100.0 | 100.0 |
| Ln₂O₃ | 41.60 | 41.00 | 41.00 | 41.00 | 25.00 | 25.00 | 47.00 | 46.00 |
| RO | 0.00 | 0.00 | 1.50 | 1.00 | 0.00 | 20.00 | 0.00 | 2.00 |
| Rn₂O | 0.00 | 0.80 | 0.00 | 0.00 | 0.00 | 0.00 | 1.00 | 0.00 |
| (SiO₂ + Al₂O₃)/B₂O₃ | 0.86 | 0.87 | 0.92 | 0.92 | 0.71 | 0.83 | 0.68 | 0.68 |
| SiO₂ + Al₂O₃ | 27.00 | 27.00 | 27.60 | 27.80 | 25.00 | 25.00 | 21.00 | 21.00 |
| Al₂O₃/Ln₂O₃ | 0.41 | 0.41 | 0.41 | 0.41 | 0.60 | 0.60 | 0.23 | 0.24 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.18 | 2.13 | 2.18 | 2.21 | 1.43 | 1.00 | 2.13 | 2.03 |
| Ln₂O₃/RO | | | 27.33 | 41.00 | | 1.25 | | 23.00 |
| Ln₂O₃/Rn₂O | | 51.25 | | | | | 47.00 | |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 0.00 | 46.50 | 0.00 | 0.00 | 0.00 | 0.00 | 52.00 | 0.00 |
| nd | 1.65 | 1.65 | 1.65 | 1.65 | 1.62 | 1.65 | 1.67 | 1.67 |
| vd | 56.2 | 56.4 | 55.9 | 56.2 | 58.1 | 56.6 | 55.6 | 55.6 |
| Specific gravity (d) | 3.35 | 3.34 | | | | | | |
| Powder method acid resistance (RA) | 3 | 3 | 3 | 3 | 4 | 4 | 3 | 3 |
| Liquidus temperature | | | | | | | | |

**[Table 7]**

| (Unit: mass%) | Example | | | | | | | |
|---|---|---|---|---|---|---|---|---|
| | 1-45 | 1-46 | 1-47 | 1-48 | 1-49 | 1-50 | 1-51 | 1-52 |
| SiO₂ | 9.0 | 11.0 | 12.0 | 11.0 | 10.5 | 10.5 | 10.5 | 9.2 |
| B₂O₃ | 32.0 | 29.2 | 30.2 | 30.0 | 28.5 | 28.3 | 28.5 | 28.0 |
| Al₂O₃ | 9.0 | 10.5 | 8.5 | 11.0 | 13.2 | 13.2 | 13.2 | 11.0 |
| La₂O₃ | 38.0 | 36.2 | 35.0 | 48.0 | 24.0 | 34.0 | 25.0 | 38.8 |
| Y₂O₃ | 10.0 | 12.0 | 12.0 | | | | 10.0 | 12.7 |
| Gd₂O₃ | | | | | 23.0 | 13.0 | 12.0 | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| MgO | | | | | | | | |
| CaO | 2.0 | 0.8 | 2.0 | | | | | |
| SrO | | 0.3 | 0.3 | | | | | 0.3 |
| BaO | | | | | | 1.0 | 0.8 | |
| Li₂O | | | | | 0.8 | | | |
| Sb₂O₃ | | | | | | | | |
| TOTAL | 100.0 | 100.0 | 100.0 | 100.0 | 100.0 | 100.0 | 100.0 | 100.0 |
| Ln₂O₃ | 48.00 | 48.20 | 47.00 | 48.00 | 47.00 | 47.00 | 47.00 | 51.50 |
| RO | 2.00 | 1.10 | 2.30 | 0.00 | 0.00 | 1.00 | 0.80 | 0.30 |
| Rn₂O | 0.00 | 0.00 | 0.00 | 0.00 | 0.80 | 0.00 | 0.00 | 0.00 |
| (SiO₂ + Al₂O₃)/B₂O₃ | 0.56 | 0.74 | 0.68 | 0.73 | 0.83 | 0.84 | 0.83 | 0.72 |
| SiO₂ + Al₂O₃ | 18.00 | 21.50 | 20.50 | 22.00 | 23.70 | 23.70 | 23.70 | 20.20 |
| Al₂O₃/Ln₂O₃ | 0.19 | 0.22 | 0.18 | 0.23 | 0.28 | 0.28 | 0.28 | 0.21 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 1.94 | 2.30 | 2.08 | 2.33 | 2.41 | 2.41 | 2.41 | 2.53 |
| Ln₂O₃/RO | 24.00 | 43.82 | 20.43 | | | 47.00 | 58.75 | 171.67 |
| Ln₂O₃/Rn₂O | | | | | 58.75 | | | |
| BaO × Gd₂O₃ | 0.00 | 0.00 | 0.00 | 0.00 | 0.00 | 13.00 | 9.60 | 0.00 |
| (SiO₂ + B₂O₃ + Al₂O₃) × Rn₂O | 0.00 | 0.00 | 0.00 | 0.00 | 41.76 | 0.00 | 0.00 | 0.00 |
| nd | 1.68 | 1.68 | 1.67 | 1.67 | 1.66 | 1.67 | 1.67 | 1.69 |
| vd | 55.1 | 55.1 | 55.5 | 55.1 | 55.9 | 55.5 | 55.7 | 54.4 |
| Specific gravity (d) | | | | | | 3.64 | 3.54 | |
| Powder method acid resistance (RA) | 3 | 3 | 3 | 3 | 3 | 3 | 3 | 3 |
| Liquidus temperature | | | | | | 1000 or lower | 1087 | |

**[Table 8]**

| (Unit: mass%) | Example | | | | | | | |
|---|---|---|---|---|---|---|---|---|
| | 1-53 | 1-54 | 1-55 | 1-56 | 1-57 | 1-58 | 1-59 | 1-60 |
| SiO₂ | 9.8 | 10.2 | 9.8 | 8.3 | 9.8 | 9.8 | 9.3 | 9.3 |
| B₂O₃ | 28.7 | 28.8 | 28.7 | 29.8 | 28.5 | 28.2 | 28.2 | 28.2 |
| Al₂O₃ | 10.5 | 10.0 | 10.5 | 10.5 | 10.2 | 10.5 | 11.0 | 11.5 |
| La₂O₃ | 38.8 | 38.8 | 41.0 | 38.8 | 39.0 | 43.0 | 39.0 | 26.0 |
| Y₂O₃ | 12.2 | 12.2 | 10.0 | 12.6 | 12.5 | 8.5 | 11.2 | |
| Gd₂O₃ | | | | | | | | 25.0 |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | | | |
| MgO | | | | | | | | |
| CaO | | | | | | | 1.0 | |
| SrO | | | | | | | 0.3 | |
| BaO | | | | | | | | |
| Li₂O | | | | | | | | |
| Sb₂O₃ | | | | | | | | |
| TOTAL | 100.0 | 100.0 | 100.0 | 100.0 | 100.0 | 100.0 | 100.0 | 100.0 |
| Ln₂O₃ | 51.00 | 51.00 | 51.00 | 51.40 | 51.50 | 51.50 | 50.20 | 51.00 |
| RO | 0.00 | 0.00 | 0.00 | 0.00 | 0.00 | 0.00 | 1.30 | 0.00 |
| Rn₂O | 0.00 | 0.00 | 0.00 | 0.00 | 0.00 | 0.00 | 0.00 | 0.00 |
| (SiO₂ + Al₂O₃)/B₂O₃ | 0.71 | 0.70 | 0.71 | 0.63 | 0.70 | 0.72 | 0.72 | 0.74 |
| SiO₂ + Al₂O₃ | 20.30 | 20.20 | 20.30 | 18.80 | 20.00 | 20.30 | 20.30 | 20.80 |
| Al₂O₃/Ln₂O₃ | 0.21 | 0.20 | 0.21 | 0.20 | 0.20 | 0.20 | 0.22 | 0.23 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.48 | 2.47 | 2.48 | 2.36 | 2.51 | 2.55 | 2.39 | 2.55 |
| Ln₂O₃/RO | | | | | | | 38.62 | |
| Ln₂O₃/Rn₂O | | | | | | | | |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 0.00 | 0.00 | 0.00 | 0.00 | 0.00 | 0.00 | 0.00 | 0.00 |
| nd | 1.69 | 1.69 | 1.69 | 1.69 | 1.69 | 1.69 | 1.69 | 1.68 |
| vd | 54.6 | 54.6 | 54.9 | 54.8 | 54.7 | 54.6 | 54.6 | 55.3 |
| Specific gravity (d) | | | | | | | | |
| Powder method acid resistance (RA) | 3 | 3 | 3 | 3 | 3 | 3 | 3 | 3 |
| Liquidus temperature | | | | | | | | |

**[Table 9]**

| (Unit: mass%) | Example | | | | | | | |
|---|---|---|---|---|---|---|---|---|
| | 1-61 | 1-62 | 1-63 | 1-64 | 1-65 | 1-66 | 1-67 | 1-68 |
| SiO₂ | 9.5 | 8.0 | 10.0 | 28.0 | 29.8 | 28.7 | 25.8 | 25.8 |
| B₂O₃ | 27.0 | 28.0 | 27.0 | 11.8 | 5.5 | 5.5 | 11.7 | 11.7 |
| Al₂O₃ | 10.0 | 9.0 | 11.5 | 11.0 | 17.0 | 17.0 | 10.5 | 10.5 |
| La₂O₃ | 39.0 | 42.7 | 50.3 | 36.2 | 35.8 | 33.0 | 41.2 | 26.0 |
| Y₂O₃ | 11.5 | 12.3 | | 12.1 | 11.9 | 10.0 | 9.8 | |
| Gd₂O₃ | | | | | | | | 25.0 |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | | 5.8 | | |
| MgO | | | | | | | | |
| CaO | | | 1.2 | | | | | |
| SrO | | | | | | | | |
| BaO | 3.0 | | | | | | | |
| Li₂O | | | | 0.9 | | | 1.0 | 1.0 |
| Sb₂O₃ | | | | | | | | |
| TOTAL | 100.0 | 100.0 | 100.0 | 100.0 | 100.0 | 100.0 | 100.0 | 100.0 |
| Ln₂O₃ | 50.50 | 55.00 | 50.30 | 48.32 | 47.70 | 43.00 | 51.00 | 51.00 |
| RO | 3.00 | 0.00 | 1.20 | 0.00 | 0.00 | 5.80 | 0.00 | 0.00 |
| Rn₂O | 0.00 | 0.00 | 0.00 | 0.88 | 0.00 | 0.00 | 1.00 | 1.00 |
| (SiO₂ + Al₂O₃)/B₂O₃ | 0.72 | 0.61 | 0.80 | 3.31 | 8.51 | 8.31 | 3.10 | 3.10 |
| SiO₂ + Al₂O₃ | 19.50 | 17.00 | 21.50 | 39.00 | 46.80 | 45.70 | 36.30 | 36.30 |
| Al₂O₃/Ln₂O₃ | 0.20 | 0.16 | 0.23 | 0.23 | 0.36 | 0.40 | 0.21 | 0.21 |
| + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.33 | 2.57 | 2.55 | 6.89 | 17.18 | 7.85 | 6.87 | 6.87 |
| Ln₂O₃/RO | 16.83 | | 41.92 | | | 7.41 | | |
| Ln₂O₃/Rn₂O | | | | 54.91 | | | 51.00 | 51.00 |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 0.00 | 0.00 | 0.00 | 44.70 | 0.00 | 0.00 | 48.00 | 48.00 |
| nd | 1.69 | 1.71 | 1.69 | 1.67 | 1.67 | 1.67 | 1.68 | 1.67 |
| vd | 54.4 | 54.0 | 54.4 | 54.5 | 52.8 | 52.8 | 53.7 | 54.2 |
| Specific gravity (d) | | | | 3.57 | 3.65 | 3.67 | 3.65 | 3.83 |
| Powder method acid resistance (RA) | 3 | 3 | 3 | 2 | 1 | 1 | 2 | 2 |
| Liquidus temperature | | | | | | | | |

**[Table 10]**

| (Unit: mass%) | Example | | | | | | | |
|---|---|---|---|---|---|---|---|---|
| | 1-69 | 1-70 | 1-71 | 1-72 | 1-73 | 1-74 | 1-75 | 1-69 |
| SiO₂ | 24.3 | 29.3 | 28.7 | 29.0 | 27.0 | 25.4 | 21.0 | 24.3 |
| B₂O₃ | 11.5 | 5.5 | 5.5 | 5.5 | 5.5 | 11.6 | 11.5 | 11.5 |
| Al₂O₃ | 12.5 | 14.0 | 16.5 | 15.9 | 15.0 | 11.5 | 12.0 | 12.5 |
| La₂O₃ | 39.0 | 39.0 | 38.5 | 25.0 | 24.0 | 25.3 | 42.5 | 39.0 |
| Y₂O₃ | 11.2 | 11.2 | 10.8 | | | | 12.0 | 11.2 |
| Gd₂O₃ | | | | 24.6 | 23.0 | 25.0 | | |
| ZrO₂ | | | | | | | | |
| TiO₂ | | | | | | | | |
| Nb₂O₅ | | | | | | | | |
| Ta₂O₅ | | | | | | | | |
| WO₃ | | | | | | | | |
| ZnO | | | | | 5.6 | | | |
| MgO | | | | | | | | |
| CaO | 1.0 | | | | | | | 1.0 |
| SrO | 0.5 | | | | | | | 0.5 |
| BaO | | | | | | | | |
| Li₂O | | 1.0 | | | | 1.2 | 1.0 | |
| Sb₂O₃ | | | | | | | | |
| TOTAL | 100.0 | 100.0 | 100.0 | 100.0 | 100.0 | 100.0 | 100.0 | 100.0 |
| Ln₂O₃ | 50.20 | 50.20 | 49.30 | 49.60 | 47.00 | 50.30 | 54.50 | 50.20 |
| RO | 1.50 | 0.00 | 0.00 | 0.00 | 5.55 | 0.00 | 0.00 | 1.50 |
| Rn₂O | 0.00 | 1.00 | 0.00 | 0.00 | 0.00 | 1.20 | 1.00 | 0.00 |
| (SiO₂ + Al₂O₃)/B₂O₃ | 3.20 | 7.87 | 8.22 | 8.16 | 7.63 | 3.18 | 2.87 | 3.20 |
| SiO₂ + Al₂O₃ | 36.80 | 43.30 | 45.20 | 44.90 | 41.95 | 36.90 | 33.00 | 36.80 |
| Al₂O₃/Ln₂O₃ | 0.25 | 0.28 | 0.33 | 0.32 | 0.32 | 0.23 | 0.22 | 0.25 |
| + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 | 0.00 |
| (Ln₂O₃ + SiO₂+ Al₂O₃)/(RO + Rn₂O + B₂O₃) | 6.69 | 14.38 | 17.18 | 17.18 | 8.05 | 6.81 | 7.00 | 6.69 |
| Ln₂O₃/RO | 33.47 | | | | 8.47 | | | 33.47 |
| Ln₂O₃/Rn₂O | | 50.20 | | | | 41.92 | 54.50 | |
| BaO × Gd₂O₃ | 0.00 | 0.00 | 0.00 | 0.00 | 0.00 | 0.00 | 0.00 | 0.00 |
| (SiO₂ + B₂O₃ + Al₂O₃) × Rn₂O | 0.00 | 48.80 | 0.00 | 0.00 | 0.00 | 58.20 | 44.50 | 0.00 |
| nd | 1.68 | 1.68 | 1.68 | 1.66 | 1.68 | 1.66 | 1.70 | 1.68 |
| vd | 53.4 | 53.2 | 53.3 | 53.6 | 53.1 | 54.5 | 52.7 | 53.4 |
| Specific gravity (d) | 3.73 | 3.72 | 3.70 | 3.82 | 3.94 | 3.80 | 3.86 | 3.73 |
| Powder method acid resistance (RA) | 2 | 1 | 1 | 1 | 1 | 2 | 2 | 2 |
| Liquidus temperature | | | | | | | | |

**[Table 11]**

| (Unit: mass%) | Example | | | |
|---|---|---|---|---|
| | 1-76 | 1-77 | 1-78 | 1-79 |
| SiO₂ | 25.0 | 24.2 | 23.0 | 23.5 |
| B₂O₃ | 5.5 | 5.5 | 5.5 | 5.5 |
| Al₂O₃ | 14.0 | 16.2 | 15.9 | 16.5 |
| La₂O₃ | 42.5 | 42.3 | 38.0 | 26.6 |
| Y₂O₃ | 12.0 | 11.8 | 9.3 | |
| Gd₂O₃ | | | | 25.6 |
| ZrO₂ | | | | |
| TiO₂ | | | | |
| Nb₂O₅ | | | | |
| Ta₂O₅ | | | | |
| WO₃ | | | | |
| ZnO | | | 8.3 | 2.3 |
| MgO | | | | |
| CaO | | | | |
| SrO | | | | |
| BaO | | | | |
| Li₂O | 1.0 | | | |
| Sb₂O₃ | | | | |
| TOTAL | 100.0 | 100.0 | 100.0 | 100.0 |
| Ln₂O₃ | 54.50 | 54.10 | 47.30 | 52.20 |
| RO | 0.00 | 0.00 | 8.30 | 2.30 |
| Rn₂O | 1.00 | 0.00 | 0.00 | 0.00 |
| (SiO₂ + Al₂O₃)/B₂O₃ | 7.09 | 7.35 | 7.07 | 7.27 |
| SiO₂ + Al₂O₃ | 39.00 | 40.40 | 38.90 | 40.00 |
| Al₂O₃/Ln₂O₃ | 0.26 | 0.30 | 0.34 | 0.32 |
| ZrO₂ + TiO₂ + Nb₂O₅ + Ta₂O₅ + WO₃ + Bi₂O₃ + TeO₂ | 0.00 | 0.00 | 0.00 | 0.00 |
| (Ln₂O₃ + SiO₂ + Al₂O₃)/(RO + Rn₂O + B₂O₃) | 14.38 | 17.18 | 6.25 | 11.82 |
| Ln₂O₃/RO | | | 5.70 | 22.70 |
| Ln₂O₃/Rn₂O | 54.50 | | | |
| BaO × Gd₂O₃ | 0.00 | 0.00 | 0.00 | 0.00 |
| (SiO₂ + B₂O₃ + Al₂O₃) × Rn₂O | 44.50 | 0.00 | 0.00 | 0.00 |
| nd | 1.71 | 1.71 | 1.70 | 1.69 |
| vd | 51.9 | 51.9 | 51.6 | 52.2 |
| Specific gravity (d) | 3.90 | 3.90 | 3.90 | 4.05 |
| Powder method acid resistance (RA) | 1 | 1 | 1 | 1 |
| Liquidus temperature | | | | |

**[Table 12]**

| (Unit: mass%) | Example | | | | | | |
|---|---|---|---|---|---|---|---|
| | 2-1 | 2-2 | 2-3 | 2-4 | 2-5 | 2-6 | 2-7 |
| SiO₂ | 45.00 | 31.49 | 34.10 | 19.70 | 20.52 | 17.00 | 15.00 |
| B₂O₃ | | 18.72 | 12.30 | 24.86 | 25.89 | 37.80 | 26.00 |
| Al₂O₃ | | 2.60 | 2.40 | 1.93 | 2.01 | | |
| La₂O₃ | 16.90 | 17.53 | 16.20 | 29.46 | 30.68 | 21.70 | 23.00 |
| Y₂O₃ | | | | | | 10.00 | |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | 29.50 | | 7.60 | | | 13.50 | |
| CaO | | 22.73 | 21.00 | 9.67 | 10.07 | | 20.00 |
| SrO | | | | 2.76 | 2.88 | | 5.00 |
| BaO | | 6.93 | 6.40 | | | | 10.00 |
| Li₂O | | | | | | | 1.00 |
| Na₂O | 4.80 | | | | 7.95 | | |
| K₂O | 3.80 | | | 11.61 | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 45.0 | 50.2 | 46.4 | 44.6 | 46.4 | 54.8 | 41.0 |
| Ln₂O₃ | 16.90 | 17.53 | 16.20 | 29.46 | 30.68 | 31.70 | 23.00 |
| RO | 29.50 | 29.65 | 35.00 | 12.43 | 12.94 | 13.50 | 35.00 |
| Rn₂O | 8.60 | 0.00 | 0.00 | 11.61 | 7.95 | 0.00 | 1.00 |
| (SiO₂ + Al₂O₃)/B₂O₃ | | 1.82 | 2.97 | 0.87 | 0.87 | 0.45 | 0.58 |
| SiO₂ + Al₂O₃ | 45.00 | 34.09 | 36.50 | 21.64 | 22.53 | 17.00 | 15.00 |
| Al₂O₃/Ln₂O₃ | 0.00 | 0.15 | 0.15 | 0.07 | 0.07 | 0.00 | 0.00 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/ (RO + Rn₂O + B₂O₃) | 1.62 | 1.07 | 1.11 | 1.05 | 1.14 | 0.95 | 0.61 |
| Ln₂O₃/Rn₂O | 1.97 | | | 2.54 | 3.86 | | 23.00 |
| BaO × Gd₂O₃ | 0 | 0 | 0 | 0 | 0 | 0 | 0 |
| (SiO₂ + B₂O₃ + Al₂O₃) × Rn₂O | 387.0 | 0.0 | 0.0 | 539.8 | 385.2 | 0.0 | 41.0 |
| nd | 1.62 | 1.64 | 1.65 | 1.62 | 1.64 | 1.70 | 1.68 |
| vd | 50.3 | 57.2 | 55.0 | 56.1 | 55.9 | 53.9 | 55.4 |
| Specific gravity (d) | 3.37 | 3.20 | 3.32 | 3.19 | 3.28 | 3.32 | 3.50 |
| Powder method acid resistance (RA) | 2 | 4 | 4 | 4 | 4 | 4 | 4 |
| d × RA | 6.74 | 12.82 | 13.28 | 12.74 | 13.14 | 13.28 | 13.98 |
| Liquidus temperature | | | | | | | |

**[Table 13]**

| (Unit: mass%) | Example | | | | | | |
|---|---|---|---|---|---|---|---|
| | 2-8 | 2-9 | 2-10 | 2-11 | 2-12 | 2-13 | 2-14 |
| SiO₂ | 15.00 | 29.00 | 29.00 | 31.00 | 33.00 | 31.50 | 30.00 |
| B₂O₃ | 26.00 | 12.00 | 12.00 | 12.00 | 12.00 | 12.00 | 12.00 |
| Al₂O₃ | | | | | | 1.50 | 5.00 |
| La₂O₃ | 15.50 | 23.00 | 15.50 | 18.50 | 21.50 | 21.50 | 24.50 |
| Y₂O₃ | 10.00 | | 10.00 | 10.00 | 10.00 | 10.00 | 10.00 |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 20.00 | 20.00 | 20.00 | 20.00 | 17.00 | 17.00 | 14.00 |
| SrO | 5.00 | 5.00 | 5.00 | | | | |
| BaO | 7.50 | 10.00 | 7.50 | 7.50 | 5.50 | 5.50 | 3.50 |
| Li₂O | 1.00 | 1.00 | 1.00 | 1.00 | 1.00 | 1.00 | 1.00 |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 41.0 | 41.0 | 41.0 | 43.0 | 45.0 | 43.5 | 42.0 |
| Ln₂O₃ | 25.50 | 23.00 | 25.50 | 28.50 | 31.50 | 31.50 | 34.50 |
| RO | 32.50 | 35.00 | 32.50 | 27.50 | 22.50 | 22.50 | 17.50 |
| Rn₂O | 1.00 | 1.00 | 1.00 | 1.00 | 1.00 | 1.00 | 1.00 |
| (SiO₂ + Al₂O₃)/B₂O₃ | 0.58 | 2.42 | 2.42 | 2.58 | 2.75 | 2.75 | 2.92 |
| SiO₂ + Al₂O₃ | 15.00 | 29.00 | 29.00 | 31.00 | 33.00 | 33.00 | 35.00 |
| Al₂O₃/Ln₂O₃ | 0.00 | 0.00 | 0.00 | 0.00 | 0.00 | 0.05 | 0.14 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 0.68 | 1.08 | 1.20 | 1.47 | 1.82 | 1.82 | 2.28 |
| Ln₂O₃/Rn₂O | 25.50 | 23.00 | 25.50 | 28.50 | 31.50 | 31.50 | 34.50 |
| BaO × Gd₂O₃ | 0 | 0 | 0 | 0 | 0 | 0 | 0 |
| (SiO₂ + B₂O₃ + Al₂O₃) × Rn₂O | 41.0 | 41.0 | 41.0 | 43.0 | 45.0 | 45.0 | 47.0 |
| nd | 1.68 | 1.67 | 1.67 | 1.67 | 1.67 | 1.67 | 1.67 |
| vd | 55.3 | 54.5 | 54.3 | 54.6 | 54.8 | 54.8 | 54.8 |
| Specific gravity (d) | 3.46 | 3.54 | 3.49 | 3.47 | 3.47 | 3.47 | 3.47 |
| Powder method acid resistance (RA) | 4 | 4 | 4 | 4 | 4 | 4 | 4 |
| d × RA | 13.82 | 14.16 | 13.96 | 13.86 | 13.86 | 13.88 | 13.86 |
| Liquidus temperature | | | | | | | |

**[Table 14]**

| (Unit: mass%) | Example | | | | | | |
|---|---|---|---|---|---|---|---|
| | 2-15 | 2-16 | 2-17 | 2-18 | 2-19 | 2-20 | 2-21 |
| SiO₂ | 25.00 | 29.60 | 26.00 | 26.00 | 26.00 | 39.50 | 38.50 |
| B₂O₃ | 12.00 | 12.00 | 12.00 | 11.98 | 11.98 | 7.00 | 7.00 |
| Al₂O₃ | 10.00 | 11.50 | 22.00 | 17.00 | 20.00 | 2.50 | 2.50 |
| La₂O₃ | 24.50 | 29.00 | 27.00 | 30.00 | 27.00 | 21.00 | 18.00 |
| Y₂O₃ | 10.00 | | 12.00 | 14.00 | 14.00 | | |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 14.00 | | | | | 23.50 | 29.50 |
| SrO | | 4.90 | | | | | |
| BaO | 3.50 | 13.00 | | | | 3.50 | 3.50 |
| Li₂O | 1.00 | | 1.00 | 1.00 | 1.00 | 1.00 | 1.00 |
| Na₂O | | | | | | 2.00 | |
| K₂O | | | | | | | |
| Sb₂O₃ | | | | 0.02 | 0.02 | | |
| TOTAL | 100.0 | 100.0 | 100.0 | 100.0 | 100.0 | 100.0 | 100.0 |
| SiO₂ + B₂O₃ | 37.0 | 41.6 | 38.0 | 38.0 | 38.0 | 46.5 | 45.5 |
| Ln₂O₃ | 34.50 | 29.00 | 39.00 | 44.00 | 41.00 | 21.00 | 18.00 |
| RO | 17.50 | 17.90 | 0.00 | 0.00 | 0.00 | 27.00 | 33.00 |
| Rn₂O | 1.00 | 0.00 | 1.00 | 1.00 | 1.00 | 3.00 | 1.00 |
| (SiO₂ + Al₂O₃)/B₂O₃ | 2.92 | 3.43 | 4.00 | 3.59 | 3.84 | 6.00 | 5.86 |
| SiO₂ + Al₂O₃ | 35.00 | 41.10 | 48.00 | 43.00 | 46.00 | 42.00 | 41.00 |
| Al₂O₃/Ln₂O₃ | 0.29 | 0.40 | 0.56 | 0.39 | 0.49 | 0.12 | 0.14 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.28 | 2.34 | 6.69 | 6.70 | 6.70 | 1.70 | 1.44 |
| Ln₂O₃/Rn₂O | 34.50 | | 39.00 | 44.00 | 41.00 | 7.00 | 18.00 |
| BaO × Gd₂O₃ | 0 | 0 | 0 | 0 | 0 | 0 | 0 |
| (SiO₂ + B₂O₃ + Al₂O₃) × Rn₂O | 47.0 | 0.0 | 60.0 | 55.0 | 58.0 | 147.0 | 48.0 |
| nd | 1.67 | 1.63 | 1.64 | 1.65 | 1.65 | 1.64 | 1.65 |
| vd | 54.1 | 56.8 | 54.9 | 54.6 | 54.9 | 54.9 | 54.8 |
| Specific gravity (d) | 3.51 | 3.62 | 3.31 | 3.44 | 3.36 | 3.23 | 3.21 |
| Powder method acid resistance (RA) | 3 | 4 | 2 | 2 | 2 | 3 | 3 |
| d × RA | 10.53 | 14.48 | 6.62 | 6.88 | 6.73 | 9.69 | 9.63 |
| Liquidus temperature | | | | 1147 | | | |

**[Table 15]**

| (Unit: mass%) | Example | | | | | | |
|---|---|---|---|---|---|---|---|
| | 2-22 | 2-23 | 2-24 | 2-25 | 2-26 | 2-27 | 2-28 |
| SiO₂ | 21.00 | 16.00 | 16.00 | 16.00 | 10.00 | 10.00 | 10.00 |
| B₂O₃ | 17.00 | 22.00 | 23.00 | 27.00 | 32.00 | 32.00 | 32.00 |
| Al₂O₃ | 17.00 | 17.00 | 17.00 | 15.00 | 17.00 | 17.00 | 17.00 |
| La₂O₃ | 30.00 | 30.00 | 30.00 | 27.00 | 28.00 | 25.00 | 22.00 |
| Y₂O₃ | 14.00 | 14.00 | 14.00 | 14.00 | 12.00 | 15.00 | 18.00 |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | | | | |
| SrO | | | | | | | |
| BaO | | | | | | | |
| Li₂O | 1.00 | 1.00 | | 1.00 | 1.00 | 1.00 | 1.00 |
| Na₂O | | | | | | | |
| K₂O | | | | | | | |
| Sb₂O₃ | | | | | | 0.02 | 0.02 |
| TOTAL | 100.0 | 100.0 | 100.0 | 100.0 | 100.0 | 100.0 | 100.0 |
| SiO₂ + B₂O₃ | 38.0 | 38.0 | 39.0 | 43.0 | 42.0 | 42.0 | 42.0 |
| Ln₂O₃ | 44.00 | 44.00 | 44.00 | 41.00 | 40.00 | 40.00 | 40.00 |
| RO | 0.00 | 0.00 | 0.00 | 0.00 | 0.00 | 0.00 | 0.00 |
| Rn₂O | 1.00 | 1.00 | 0.00 | 1.00 | 1.00 | 1.00 | 1.00 |
| (SiO₂ + Al₂O₃)/B₂O₃ | 2.24 | 1.50 | 1.43 | 1.15 | 0.84 | 0.84 | 0.84 |
| SiO₂ + Al₂O₃ | 38.00 | 33.00 | 33.00 | 31.00 | 27.00 | 27.00 | 27.00 |
| Al₂O₃/Ln₂O₃ | 0.39 | 0.39 | 0.39 | 0.37 | 0.43 | 0.43 | 0.43 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 4.56 | 3.35 | 3.35 | 2.57 | 2.03 | 2.03 | 2.03 |
| Ln₂O₃/Rn₂O | 44.00 | 44.00 | | 41.00 | 40.00 | 40.00 | 40.00 |
| BaO × Gd₂O₃ | 0 | 0 | 0 | 0 | 0 | 0 | 0 |
| (SiO₂ + B₂O₃ + Al₂O₃) × Rn₂O | 55.0 | 55.0 | 0.0 | 58.0 | 59.0 | 59.0 | 59.0 |
| nd | 1.66 | 1.66 | 1.66 | 1.65 | 1.64 | 1.65 | 1.65 |
| vd | 55.0 | 55.4 | 55.3 | 55.9 | 56.4 | 56.5 | 56.5 |
| Specific gravity (d) | 3.43 | 3.43 | 3.43 | 3.30 | 3.27 | 3.27 | 3.26 |
| Powder method acid resistance (RA) | 2 | 3 | 3 | 3 | 3 | 3 | 3 |
| d × RA | 6.87 | 10.29 | 10.30 | 9.90 | 9.80 | 9.82 | 9.78 |
| Liquidus temperature | 1112 | 1085 | 1000 or lower | | 1004 | 1074 | 1113 |

**[Table 16]**

| (Unit: mass%) | Example | | | | | | |
|---|---|---|---|---|---|---|---|
| | 2-29 | 2-30 | 2-31 | 2-32 | 2-33 | 2-34 | 2-35 |
| SiO₂ | 10.00 | 10.00 | 10.00 | 10.00 | 10.00 | 6.14 | 5.40 |
| B₂O₃ | 32.00 | 32.00 | 32.00 | 32.00 | 32.00 | 42.99 | 37.80 |
| Al₂O₃ | 17.00 | 17.00 | 17.00 | 17.00 | 17.00 | | |
| La₂O₃ | 31.00 | 34.00 | 37.00 | 40.00 | 19.00 | 25.27 | 32.30 |
| Y₂O₃ | 9.00 | 6.00 | 3.00 | | | 22.73 | 22.00 |
| Gd₂O₃ | | | | | 21.00 | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | | | | |
| SrO | | | | | | | |
| BaO | | | | | | | |
| Li₂O | 1.00 | 1.00 | 1.00 | 1.00 | 1.00 | 2.84 | 2.50 |
| Na₂O | | | | | | | |
| K₂O | | | | | | | |
| Sb₂O₃ | 0.02 | 0.02 | 0.02 | 0.02 | | | |
| TOTAL | 100.0 | 100.0 | 100.0 | 100.0 | 100.0 | 100.0 | 100.0 |
| SiO₂ + B₂O₃ | 42.0 | 42.0 | 42.0 | 42.0 | 42.0 | 49.1 | 43.2 |
| Ln₂O₃ | 40.00 | 40.00 | 40.00 | 40.00 | 40.00 | 48.00 | 54.30 |
| RO | 0.00 | 0.00 | 0.00 | 0.00 | 0.00 | 0.00 | 0.00 |
| Rn₂O | 1.00 | 1.00 | 1.00 | 1.00 | 1.00 | 2.84 | 2.50 |
| (SiO₂ + Al₂O₃)/B₂O₃ | 0.84 | 0.84 | 0.84 | 0.84 | 0.84 | 0.14 | 0.14 |
| SiO₂ + Al₂O₃ | 27.00 | 27.00 | 27.00 | 27.00 | 27.00 | 6.14 | 5.40 |
| Al₂O₃/Ln₂O₃ | 0.43 | 0.43 | 0.43 | 0.43 | 0.43 | 0.00 | 0.00 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.03 | 2.03 | 2.03 | 2.03 | 2.03 | 1.18 | 1.48 |
| Ln₂O₃/Rn₂O | 40.00 | 40.00 | 40.00 | 40.00 | 40.00 | 16.88 | 21.72 |
| BaO × Gd₂O₃ | 0 | 0 | 0 | 0 | 0 | 0 | 0 |
| (SiO₂ + B₂O₃ + Al₂O₃) × Rn₂O | 59.0 | 59.0 | 59.0 | 59.0 | 59.0 | 139.7 | 108.0 |
| nd | 1.64 | 1.64 | 1.64 | 1.64 | 1.64 | 1.68 | 1.70 |
| vd | 56.3 | 56.3 | 56.4 | 56.4 | 56.4 | 57.0 | 55.5 |
| Specific gravity (d) | 3.27 | 3.30 | 3.31 | 3.32 | 3.44 | 3.44 | 3.69 |
| Powder method acid resistance (RA) | 3 | 3 | 3 | 3 | 3 | 4 | 4 |
| d × RA | 9.81 | 9.90 | 9.92 | 9.95 | 10.32 | 13.76 | 14.76 |
| Liquidus temperature | 1000 or lower | 1000 or lower | 1000 or lower | 1026 | | | |

**[Table 17]**

| (Unit: mass%) | Example | | | | | | |
|---|---|---|---|---|---|---|---|
| | 2-36 | 2-37 | 2-38 | 2-39 | 2-40 | 2-41 | 2-42 |
| SiO₂ | | 10.00 | 10.00 | 10.00 | 10.00 | 20.00 | 10.00 |
| B₂O₃ | 42.00 | 32.00 | 26.00 | 32.00 | 32.00 | 32.00 | 27.00 |
| Al₂O₃ | 17.00 | 17.00 | 23.00 | 17.00 | 27.00 | 17.00 | 17.00 |
| La₂O₃ | 24.00 | | 24.00 | 10.00 | 18.00 | 18.00 | 27.00 |
| Y₂O₃ | 16.00 | 40.00 | 16.00 | | 12.00 | 12.00 | 18.00 |
| Gd₂O₃ | | | | 30.00 | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | | | | |
| SrO | | | | | | | |
| BaO | | | | | | | |
| Li₂O | 1.00 | 1.00 | 1.00 | 1.00 | 1.00 | 1.00 | 1.00 |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 42.0 | 42.0 | 36.0 | 42.0 | 42.0 | 52.0 | 37.0 |
| Ln₂O₃ | 40.00 | 40.00 | 40.00 | 40.00 | 30.00 | 30.00 | 45.00 |
| RO | 0.00 | 0.00 | 0.00 | 0.00 | 0.00 | 0.00 | 0.00 |
| Rn₂O | 1.00 | 1.00 | 1.00 | 1.00 | 1.00 | 1.00 | 1.00 |
| (SiO₂ + Al₂O₃)/B₂O₃ | 0.40 | 0.84 | 1.27 | 0.84 | 1.16 | 1.16 | 1.00 |
| SiO₂ + Al₂O₃ | 17.00 | 27.00 | 33.00 | 27.00 | 37.00 | 37.00 | 27.00 |
| Al₂O₃/Ln₂O₃ | 0.43 | 0.43 | 0.58 | 0.43 | 0.90 | 0.57 | 0.38 |
| Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 1.33 | 2.03 | 2.70 | 2.03 | 2.03 | 2.03 | 2.57 |
| Ln₂O₃/Rn₂O | 40.00 | 40.00 | 40.00 | 40.00 | 30.00 | 30.00 | 45.00 |
| BaO × Gd₂O₃ | 0 | 0 | 0 | 0 | 0 | 0 | 0 |
| (SiO₂ + B₂O₃ + Al₂O₃) × Rn2O | 59.0 | 59.0 | 59.0 | 59.0 | 69.0 | 69.0 | 54.0 |
| nd | 1.65 | 1.65 | 1.65 | 1.63 | 1.62 | 1.60 | 1.67 |
| vd | 56.8 | 56.3 | 55.6 | 56.6 | 57.4 | 58.9 | 55.8 |
| Specific gravity (d) | 3.25 | 3.20 | 3.32 | 3.40 | 3.02 | 2.94 | 3.43 |
| Powder method acid resistance (RA) | 4 | 3 | 3 | 3 | 3 | 3 | 3 |
| d × RA | 13.02 | 9.59 | 9.96 | 10.19 | 9.06 | 8.82 | 10.28 |
| Liquidus temperature | | | | | | | |

**[Table 18]**

| (Unit: mass%) | Example | | | | | | |
|---|---|---|---|---|---|---|---|
| | 2-43 | 2-44 | 2-45 | 2-46 | 2-47 | 2-48 | 2-49 |
| SiO₂ | 10.00 | 10.00 | 10.00 | 10.00 | 10.00 | 10.00 | 10.00 |
| B₂O₃ | 32.00 | 32.00 | 32.00 | 32.00 | 32.00 | 32.00 | 26.50 |
| Al₂O₃ | 17.00 | 17.00 | 17.00 | 17.00 | 17.00 | 17.00 | 17.00 |
| La₂O₃ | 21.00 | 21.00 | 22.00 | 22.00 | 22.00 | 22.00 | 28.00 |
| Y₂O₃ | 14.00 | 14.00 | 14.00 | 14.00 | 14.00 | 14.00 | 6.00 |
| Gd₂O₃ | | | | | | | |
| ZrO₂ | 5.00 | | | | | | 5.50 |
| TiO₂ | | 5.00 | | | | | 6.00 |
| Nb₂O₅ | | | 5.00 | | | | |
| Ta₂O₅ | | | | | 5.00 | | |
| WO₃ | | | | 5.00 | | | |
| ZnO | | | | | | 5.00 | |
| CaO | | | | | | | |
| SrO | | | | | | | |
| BaO | | | | | | | |
| Li₂O | 1.00 | 1.00 | | | | | 1.00 |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 42.0 | 42.0 | 42.0 | 42.0 | 42.0 | 42.0 | 36.5 |
| Ln₂O₃ | 35.00 | 35.00 | 36.00 | 36.00 | 36.00 | 36.00 | 34.00 |
| RO | 0.00 | 0.00 | 0.00 | 0.00 | 0.00 | 5.00 | 0.00 |
| Rn₂O | 1.00 | 1.00 | 0.00 | 0.00 | 0.00 | 0.00 | 1.00 |
| (SiO₂ + Al₂O₃)/B₂O₃ | 0.84 | 0.84 | 0.84 | 0.84 | 0.84 | 0.84 | 1.02 |
| SiO₂ + Al₂O₃ | 27.00 | 27.00 | 27.00 | 27.00 | 27.00 | 27.00 | 27.00 |
| Al₂O₃/Ln₂O₃ | 0.49 | 0.49 | 0.47 | 0.47 | 0.47 | 0.47 | 0.50 |
| ZrO₂ + TiO₂ + Nb₂O₅ + Ta₂O₅ + WO₃ + Bi₂O₃ + TeO₂ | 5.00 | 5.00 | 5.00 | 5.00 | 5.00 | 0.00 | 11.50 |
| (Ln₂O₃ + SiO₂ + Al₂O₃)/(RO + Rn₂O + B₂O₃) | 1.88 | 1.88 | 1.97 | 1.97 | 1.97 | 1.70 | 2.22 |
| Ln₂O₃/Rn₂O | 35.00 | 35.00 | | | | | 34.00 |
| BaO × Gd₂O₃ | 0 | 0 | 0 | 0 | 0 | 0 | 0 |
| (SiO₂ + B₂O₃ + Al₂O₃) × Rn₂O | 59.0 | 59.0 | 0.0 | 0.0 | 0.0 | 0.0 | 53.5 |
| nd | 1.65 | 1.66 | 1.66 | 1.64 | 1.65 | 1.65 | 1.69 |
| vd | 53.2 | 52.1 | 52.4 | 53.3 | 53.2 | 56.2 | 45.4 |
| Specific gravity (d) | 3.24 | 3.19 | 3.27 | 3.28 | 3.31 | 3.30 | 3.38 |
| Powder method acid resistance (RA) | 3 | 3 | 3 | 3 | 3 | 3 | 3 |
| d × RA | 9.73 | 9.56 | 9.81 | 9.83 | 9.92 | 9.89 | 10.14 |
| Liquidus temperature | | 1000 or lower | | | | 1000 or lower | |

**[Table 19]**

| (Unit: mass%) | Example | | | Comparative Example |
|---|---|---|---|---|
| | 2-50 | 2-51 | 2-52 | B |
| SiO₂ | 10.00 | 9.50 | 10.0 | 10.00 |
| B₂O₃ | 32.00 | 31.10 | 31.7 | 19.70 |
| Al₂O₃ | 17.00 | 17.00 | 17.0 | |
| La₂O₃ | | 25.00 | 33.3 | 18.30 |
| Y₂O₃ | 15.00 | 17.00 | 8.0 | |
| Gd₂O₃ | 25.00 | | | |
| ZrO₂ | | | | 4.00 |
| TiO₂ | | | | 7.50 |
| Nb₂O₅ | | | | |
| Ta₂O₅ | | | | |
| WO₃ | | | | |
| ZnO | | | | 8.50 |
| CaO | | | | |
| SrO | | | | |
| BaO | | | | 32.00 |
| Li₂O | 1.00 | 0.40 | | |
| Na₂O | | | | |
| K₂O | | | | |
| Sb₂O₃ | | | 0.04 | |
| TOTAL | 100.0 | 100.0 | 100.0 | 100.0 |
| SiO₂ + B₂O₃ | 42.0 | 40.6 | 41.7 | 29.7 |
| Ln₂O₃ | 40.00 | 42.00 | 41.30 | 18.30 |
| RO | 0.00 | 0.00 | 0.00 | 40.50 |
| Rn₂O | 1.00 | 0.40 | 0.00 | 0.00 |
| (SiO₂ + Al₂O₃)/B₂O₃ | 0.84 | 0.85 | 0.85 | 0.51 |
| SiO₂ + Al₂O₃ | 27.00 | 26.50 | 27.00 | 10.00 |
| Al₂O₃/Ln₂O₃ | 0.43 | 0.40 | 0.41 | 0.00 |
| ZrO₂ + TiO₂ + Nb₂O₅ + Ta₂O₅ + WO₃ + Bi₂O₃ + TeO₂ | 0.00 | 0.00 | 0.00 | 11.50 |
| (Ln₂O₃ + SiO₂ + Al₂O₃)/(RO + Rn₂O + B₂O₃) | 2.03 | 2.17 | 2.16 | 0.47 |
| Ln₂O₃/Rn₂O | 40.00 | 105.0 | | |
| BaO × Gd₂O₃ | 0 | 0 | 0 | 0 |
| (SiO₂ + B₂O₃ + Al₂O₃) × Rn2O | 59.0 | 23.0 | 0.0 | 0.0 |
| nd | 1.63 | 1.65 | 1.65 | 1.76 |
| vd | 57.3 | 56.3 | 56.2 | 40.2 |
| Specific gravity (d) | 3.33 | 3.33 | 3.35 | 4.21 |
| Powder method acid resistance (RA) | 3 | 3 | 3 | 4 |
| d × RA | 9.99 | 10.00 | 10.05 | 16.84 |
| Liquidus temperature | | | 1000 or lower | |

**[Table 20]**

| (Unit: mass%) | Example | | | | | | |
|---|---|---|---|---|---|---|---|
| | 2-53 | 2-54 | 2-55 | 2-56 | 2-57 | 2-58 | 2-59 |
| SiO₂ | 10.0 | 10.0 | 10.8 | 11.0 | 17.3 | 17.5 | 4.5 |
| B₂O₃ | 31.4 | 31.1 | 29.9 | 30.2 | 33.3 | 35.5 | 48.3 |
| Al₂O₃ | 17.0 | 17.0 | 16.8 | 16.8 | 1.5 | 1.5 | 3.3 |
| La₂O₃ | 33.3 | 33.0 | 33.0 | 32.7 | 18.0 | 19.0 | 33.6 |
| Y₂O₃ | 8.3 | 8.0 | 8.0 | 8.3 | 3.8 | 4.5 | 8.5 |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | 1.0 | 17.2 | 21.9 | |
| SrO | | | | | 8.8 | | |
| BaO | | | 1.5 | | | | |
| Li₂O | | 0.8 | | | | | 1.8 |
| Na₂O | | | | | | | |
| K₂O | | | | | | | |
| Sb₂O₃ | 0.0 | 0.1 | 0.1 | 0.1 | 0.1 | 0.1 | 0.1 |
| TOTAL | 100.0 | 100.0 | 100.1 | 100.1 | 100.0 | 100.0 | 100.1 |
| SiO₂ + B₂O₃ | 41.40 | 41.12 | 40.70 | 41.20 | 50.60 | 53.00 | 52.80 |
| Ln₂O₃ | 41.60 | 41.00 | 41.00 | 41.00 | 21.80 | 23.50 | 42.10 |
| RO | 0.00 | 0.00 | 1.50 | 1.00 | 26.00 | 21.90 | 0.00 |
| Rn₂O | 0.00 | 0.80 | 0.00 | 0.00 | 0.00 | 0.00 | 1.80 |
| (SiO₂ + Al₂O₃)/B₂O₃ | 0.86 | 0.87 | 0.92 | 0.92 | 0.56 | 0.54 | 0.16 |
| SiO₂ + Al₂O₃ | 27.00 | 27.00 | 27.60 | 27.80 | 18.80 | 19.00 | 7.80 |
| Al₂O₃/Ln₂O₃ | 0.41 | 0.41 | 0.41 | 0.41 | 0.07 | 0.06 | 0.08 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.18 | 2.13 | 2.18 | 2.21 | 0.68 | 0.74 | 1.00 |
| Ln₂O₃/Rn₂O | | 51.25 | | | | | 23.39 |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 0.00 | 46.50 | 0.00 | 0.00 | 0.00 | 0.00 | 100.98 |
| nd | 1.65 | 1.65 | 1.65 | 1.65 | 1.65 | 1.65 | 1.65 |
| vd | 56.2 | 56.4 | 55.9 | 56.2 | 58.3 | 58.3 | 58.2 |
| Specific gravity (d) | 3.35 | 3.34 | 3.36 | 3.35 | 3.26 | 3.16 | 3.29 |
| Powder method acid resistance (RA) | 3 | 3 | 3 | 3 | 4 | 4 | 4 |
| d × RA | 10.06 | 10.02 | 10.08 | 10.05 | 13.04 | 12.64 | 13.16 |
| Liquidus temperature | 1000 or lower | 1000 or lower | 1000 or lower | 1000 or lower | | | |

**[Table 21]**

| (Unit: mass%) | Example | | | | | | |
|---|---|---|---|---|---|---|---|
| | 2-60 | 2-61 | 2-62 | 2-63 | 2-64 | 2-65 | 2-66 |
| SiO₂ | 11.4 | 13.4 | 13.9 | 16.4 | 15.9 | 15.9 | 15.9 |
| B₂O₃ | 41.9 | 39.9 | 39.9 | 36.6 | 36.6 | 35.6 | 35.1 |
| Al₂O₃ | 2.0 | 2.0 | 1.5 | 2.0 | 2.5 | 3.5 | 3.5 |
| La₂O₃ | 25.8 | 32.2 | 25.8 | 25.8 | 25.8 | 25.8 | 25.8 |
| Y₂O₃ | 6.4 | | 6.4 | 6.7 | 6.7 | 6.7 | 6.7 |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 8.8 | 8.8 | 8.8 | 8.8 | 8.8 | 8.8 | 8.8 |
| SrO | 2.0 | 2.0 | 2.0 | 2.0 | 2.0 | 2.0 | 2.0 |
| BaO | | | | | | | |
| Li₂O | 1.8 | 1.8 | 1.8 | 1.8 | 1.8 | 1.8 | 2.3 |
| Na₂O | | | | | | | |
| K₂O | | | | | | | |
| Sb₂O₃ | 0.1 | 0.1 | 0.1 | 0.1 | 0.1 | 0.1 | 0.1 |
| TOTAL | 100.1 | 100.1 | 100.1 | 100.1 | 100.1 | 100.1 | 100.1 |
| SiO₂ + B₂O₃ | 53.20 | 53.20 | 53.70 | 52.90 | 52.40 | 51.40 | 50.90 |
| Ln₂O₃ | 32.20 | 32.20 | 32.20 | 32.50 | 32.50 | 32.50 | 32.50 |
| RO | 10.80 | 10.80 | 10.80 | 10.80 | 10.80 | 10.80 | 10.80 |
| Rn₂O | 1.80 | 1.80 | 1.80 | 1.80 | 1.80 | 1.80 | 2.30 |
| (SiO₂ + Al₂O₃)/B₂O₃ | 0.32 | 0.39 | 0.39 | 0.50 | 0.50 | 0.54 | 0.55 |
| SiO₂ + Al₂O₃ | 13.35 | 15.35 | 15.35 | 18.35 | 18.35 | 19.35 | 19.35 |
| Al₂O₃/Ln₂O₃ | 0.06 | 0.06 | 0.05 | 0.06 | 0.08 | 0.11 | 0.11 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 0.84 | 0.91 | 0.91 | 1.03 | 1.03 | 1.08 | 1.08 |
| Ln₂O₃/Rn₂O | 17.89 | 17.89 | 17.89 | 18.06 | 18.06 | 18.06 | 14.13 |
| BaO × Gd₂O₃ | 0.00 | 0.00 | 0.00 | 0.00 | 0.00 | 0.00 | 0.00 |
| (SiO₂ + B₂O₃ + Al₂O₃) × Rn₂O | 99.36 | 99.36 | 99.36 | 98.82 | 98.82 | 98.82 | 125.12 |
| nd | 1.65 | 1.65 | 1.65 | 1.65 | 1.65 | 1.65 | 1.65 |
| vd | 58.8 | 58.8 | 58.8 | 58.5 | 58.5 | 58.3 | 58.4 |
| Specific gravity (d) | 3.24 | 3.29 | 3.23 | 3.24 | 3.24 | 3.24 | 3.26 |
| Powder method acid resistance (RA) | 4 | 4 | 4 | 4 | 4 | 4 | 4 |
| d × RA | 12.96 | 13.16 | 12.92 | 12.96 | 12.96 | 12.96 | 13.04 |
| Liquidus temperature | | | | 1075.0 | | 1068.0 | 1069.0 |

**[Table 22]**

| (Unit: mass%) | Example | | | | | | |
|---|---|---|---|---|---|---|---|
| | 2-67 | 2-68 | 2-69 | 2-70 | 2-71 | 2-72 | 2-73 |
| SiO₂ | 15.9 | 15.8 | 15.8 | 15.8 | 13.2 | 13.2 | 10.0 |
| B₂O₃ | 34.6 | 35.8 | 35.8 | 35.8 | 38.7 | 38.7 | 31.0 |
| Al₂O₃ | 3.5 | 3.3 | 3.3 | 3.3 | 3.0 | 3.0 | 11.0 |
| La₂O₃ | 25.8 | 25.8 | 28.8 | 19.8 | 24.2 | 21.7 | 36.5 |
| Y₂O₃ | 6.7 | 6.7 | 3.7 | 12.7 | 8.3 | 10.8 | 10.5 |
| Gd₂O₃ | | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 8.8 | 8.8 | 8.8 | 8.8 | 8.8 | 8.8 | |
| SrO | 2.0 | 2.0 | 2.0 | 2.0 | 2.0 | 2.0 | |
| BaO | | | | | | | |
| Li₂O | 1.8 | 1.8 | 1.8 | 1.8 | 1.8 | 1.8 | 1.0 |
| Na₂O | 1.0 | | | | | | |
| K₂O | | | | | | | |
| Sb₂O₃ | 0.1 | 0.1 | 0.1 | 0.1 | 0.1 | 0.0 | |
| TOTAL | 100.1 | 100.1 | 100.1 | 100.1 | 100.1 | 100.0 | 100.0 |
| SiO₂ + B₂O₃ | 50.40 | 51.60 | 51.60 | 51.60 | 51.90 | 51.90 | 41.00 |
| Ln₂O₃ | 32.50 | 32.50 | 32.50 | 32.50 | 32.50 | 32.50 | 47.00 |
| RO | 10.80 | 10.80 | 10.80 | 10.80 | 10.80 | 10.80 | 0.00 |
| Rn₂O | 2.80 | 1.80 | 1.80 | 1.80 | 1.80 | 1.80 | 1.00 |
| (SiO₂ + Al₂O₃)/B₂O₃ | 0.56 | 0.53 | 0.53 | 0.53 | 0.42 | 0.42 | 0.68 |
| SiO₂ + Al₂O₃ | 19.35 | 19.10 | 19.10 | 19.10 | 16.20 | 16.20 | 21.00 |
| Al₂O₃/Ln₂O₃ | 0.11 | 0.10 | 0.10 | 0.10 | 0.09 | 0.09 | 0.23 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 1.08 | 1.07 | 1.07 | 1.07 | 0.95 | 0.95 | 2.13 |
| Ln₂O₃/Rn₂O | 11.61 | 18.06 | 18.06 | 18.06 | 18.06 | 18.06 | 47.00 |
| BaO × Gd₂O₃ | 0.00 | 0.00 | 0.00 | 0.00 | 0.00 | 0.00 | 0.00 |
| (SiO₂ + B₂O₃ + Al₂O₃) × Rn₂O | 150.92 | 98.82 | 98.82 | 98.82 | 98.82 | 98.82 | 52.00 |
| nd | 1.65 | 1.65 | 1.65 | 1.65 | 1.65 | 1.65 | 1.67 |
| vd | 57.7 | 58.2 | 58.2 | 58.3 | 58.5 | 58.6 | 55.6 |
| Specific gravity (d) | 3.26 | 3.25 | 3.27 | 3.20 | 3.26 | 3.24 | 3.52 |
| Powder method acid resistance (RA) | 4 | 4 | 4 | 4 | 4 | 4 | 3 |
| d × RA | 13.04 | 13.00 | 13.08 | 12.80 | 13.04 | 12.96 | 10.56 |
| Liquidus temperature | 1069 | 1068 | | | 1018 | 1000 or lower | 1000 or lower |

**[Table 23]**

| (Unit: mass%) | Example | | | | | | |
|---|---|---|---|---|---|---|---|
| | 2-74 | 2-75 | 2-76 | 2-77 | 2-78 | 2-79 | 2-80 |
| SiO₂ | 10.0 | 9.0 | 11.0 | 12.0 | 11.0 | 10.5 | 10.5 |
| B₂O₃ | 31.0 | 34.0 | 29.2 | 30.2 | 30.0 | 28.5 | 28.3 |
| Al₂O₃ | 11.0 | 7.0 | 10.5 | 8.5 | 11.0 | 13.2 | 13.2 |
| La₂O₃ | 36.0 | 38.0 | 36.2 | 35.0 | 48.0 | 24.0 | 34.0 |
| Y₂O₃ | 10.0 | 10.0 | 12.0 | 12.0 | | | |
| Gd₂O₃ | | | | | | 23.0 | 13.0 |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 2.0 | 2.0 | 0.8 | 2.0 | | | |
| SrO | | | 0.3 | 0.3 | | | |
| BaO | | | | | | | |
| Li₂O | | | | | | 0.8 | 1.0 |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 41.00 | 43.00 | 40.20 | 42.20 | 41.00 | 39.00 | 38.80 |
| Ln₂O₃ | 46.00 | 48.00 | 48.20 | 47.00 | 48.00 | 47.00 | 47.00 |
| RO | 2.00 | 2.00 | 1.10 | 2.30 | 0.00 | 0.00 | 0.00 |
| Rn₂O | 0.00 | 0.00 | 0.00 | 0.00 | 0.00 | 0.80 | 1.00 |
| (SiO₂ + Al₂O₃)/B₂O₃ | 0.68 | 0.47 | 0.74 | 0.68 | 0.73 | 0.83 | 0.84 |
| SiO₂ + Al₂O₃ | 21.00 | 16.00 | 21.50 | 20.50 | 22.00 | 23.70 | 23.70 |
| Al₂O₃/Ln₂O₃ | 0.24 | 0.15 | 0.22 | 0.18 | 0.23 | 0.28 | 0.28 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.03 | 1.78 | 2.30 | 2.08 | 2.33 | 2.41 | 2.41 |
| Ln₂O₃/Rn₂O | | | | | | 58.75 | 47.00 |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 0.00 | 0.00 | 0.00 | 0.00 | 0.00 | 41.76 | 52.00 |
| nd | 1.67 | 1.68 | 1.68 | 1.67 | 1.67 | 1.66 | 1.67 |
| vd | 55.6 | 55.6 | 55.1 | 55.5 | 55.1 | 55.9 | 55.5 |
| Specific gravity (d) | 3.52 | 3.59 | 3.58 | 3.54 | 3.65 | 3.66 | 3.64 |
| Powder method acid resistance (RA) | 3 | 3 | 3 | 3 | 3 | 3 | 3 |
| d × RA | 10.56 | 10.77 | 10.74 | 10.62 | 10.95 | 10.98 | 10.98 |
| Liquidus temperature | 1000 or lower | 1019 | 1000 or lower | 1069 | 1060 | 1000 or lower | 1000 or lower |

**[Table 24]**

| (Unit: mass%) | Example | | | | | | |
|---|---|---|---|---|---|---|---|
| | 2-81 | 2-82 | 2-83 | 2-84 | 2-85 | 2-86 | 2-87 |
| SiO₂ | 10.5 | 9.2 | 10.2 | 9.8 | 8.3 | 9.8 | 9.8 |
| B₂O₃ | 28.5 | 28.0 | 28.8 | 28.7 | 29.8 | 28.5 | 28.2 |
| Al₂O₃ | 13.2 | 11.0 | 10.0 | 10.5 | 10.5 | 10.2 | 10.5 |
| La₂O₃ | 25.0 | 38.8 | 38.8 | 41.0 | 38.8 | 39.0 | 43.0 |
| Y₂O₃ | 10.0 | 12.7 | 12.2 | 10.0 | 12.6 | 12.5 | 8.5 |
| Gd₂O₃ | 12.0 | | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | | | | |
| SrO | | 0.3 | | | | | |
| BaO | | | | | | | |
| Li₂O | 0.8 | | | | | | |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 39.00 | 37.20 | 39.00 | 38.50 | 38.10 | 38.30 | 38.00 |
| Ln₂O₃ | 47.00 | 51.50 | 51.00 | 51.00 | 51.40 | 51.50 | 51.50 |
| RO | 0.00 | 0.30 | 0.00 | 0.00 | 0.00 | 0.00 | 0.00 |
| Rn₂O | 0.80 | 0.00 | 0.00 | 0.00 | 0.00 | 0.00 | 0.00 |
| (SiO₂ + Al₂O₃)/B₂O₃ | 0.83 | 0.72 | 0.70 | 0.71 | 0.63 | 0.70 | 0.72 |
| SiO₂ + Al₂O₃ | 23.70 | 20.20 | 20.20 | 20.30 | 18.80 | 20.00 | 20.30 |
| Al₂O₃/Ln₂O₃ | 0.28 | 0.21 | 0.20 | 0.21 | 0.20 | 0.20 | 0.20 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.41 | 2.53 | 2.47 | 2.48 | 2.36 | 2.51 | 2.55 |
| Ln₂O₃/Rn₂O | 58.75 | | | | | | |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 41.76 | 0.00 | 0.00 | 0.00 | 0.00 | 0.00 | 0.00 |
| nd | 1.67 | 1.69 | 1.69 | 1.69 | 1.69 | 1.69 | 1.69 |
| vd | 55.7 | 54.4 | 54.6 | 54.9 | 54.8 | 54.7 | 54.6 |
| Specific gravity (d) | 3.54 | 3.70 | 3.67 | 3.68 | 3.65 | 3.65 | 3.71 |
| Powder method acid resistance (RA) | 3 | 3 | 3 | 3 | 3 | 3 | 3 |
| d × RA | 10.98 | 11.10 | 11.01 | 11.04 | 10.95 | 10.95 | 11.13 |
| Liquidus temperature | 1087 | 1000 or lower | 1057 | 1000 or lower | 1057 | 1050 | 1079 |

**[Table 25]**

| (Unit: mass%) | Example | | | | | | |
|---|---|---|---|---|---|---|---|
| | 2-88 | 2-89 | 2-90 | 2-91 | 2-92 | 2-93 | 2-94 |
| SiO₂ | 9.3 | 9.3 | 9.5 | 8.0 | 10.0 | 6.4 | 6.4 |
| B₂O₃ | 28.2 | 28.2 | 27.0 | 28.0 | 27.0 | 38.4 | 37.2 |
| Al₂O₃ | 11.0 | 11.5 | 10.0 | 9.0 | 11.5 | 2.0 | 2.0 |
| La₂O₃ | 39.0 | 26.0 | 39.0 | 42.7 | 50.3 | 39.2 | 39.2 |
| Y₂O₃ | 11.2 | | 11.5 | 12.3 | | 6.0 | 7.2 |
| Gd₂O₃ | | 25.0 | | | | | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | 1.0 | | | | 1.2 | 8.0 | 8.0 |
| SrO | 0.3 | | | | | | |
| BaO | | | 3.0 | | | | |
| Li₂O | | | | | | | |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 37.50 | 37.50 | 36.50 | 36.00 | 37.00 | 44.80 | 43.60 |
| Ln₂O₃ | 50.20 | 51.00 | 50.50 | 55.00 | 50.30 | 45.20 | 46.40 |
| RO | 1.30 | 0.00 | 3.00 | 0.00 | 1.20 | 8.00 | 8.00 |
| Rn₂O | 0.00 | 0.00 | 0.00 | 0.00 | 0.00 | 0.00 | 0.00 |
| (SiO₂ + Al₂O₃)/B₂O₃ | 0.72 | 0.74 | 0.72 | 0.61 | 0.80 | 0.22 | 0.23 |
| SiO₂ + Al₂O₃ | 20.30 | 20.80 | 19.50 | 17.00 | 21.50 | 8.40 | 8.40 |
| Al₂O₃/Ln₂O₃ | 0.22 | 0.23 | 0.20 | 0.16 | 0.23 | 0.04 | 0.04 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 2.39 | 2.55 | 2.33 | 2.57 | 2.55 | 1.16 | 1.21 |
| Ln₂O₃/Rn₂O | | | | | | | |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 0.00 | 0.00 | 0.00 | 0.00 | 0.00 | 0.00 | 0.00 |
| nd | 1.69 | 1.68 | 1.69 | 1.71 | 1.69 | 1.69 | 1.70 |
| vd | 54.6 | 55.3 | 54.4 | 54.0 | 54.4 | 56.1 | 55.7 |
| Specific gravity (d) | 3.67 | 3.81 | 3.76 | 3.85 | 3.73 | 3.62 | 3.64 |
| Powder method acid resistance (RA) | 3 | 3 | 3 | 3 | 3 | 4 | 4 |
| d × RA | 11.01 | 11.43 | 11.28 | 11.55 | 11.19 | 14.48 | 14.56 |
| Liquidus temperature | 1013 | 1000 or lower | 1053 | 1047 | 1100 | 1077 | 1000 or lower |

**[Table 26]**

| (Unit: mass%) | Example | | | | | | |
|---|---|---|---|---|---|---|---|
| | 2-95 | 2-96 | 2-97 | 2-98 | 2-99 | 2-100 | 2-101 |
| SiO₂ | 6.4 | 7.0 | 34.8 | 33.9 | 34.3 | 34.3 | 33.7 |
| B₂O₃ | 37.2 | 36.5 | 6.0 | 6.0 | 6.0 | 6.0 | 6.0 |
| Al₂O₃ | 2.0 | 2.0 | 17.5 | 17.0 | 19.0 | 19.7 | 19.0 |
| La₂O₃ | 35.4 | 35.8 | 27.7 | 27.8 | 27.7 | 30.0 | 24.5 |
| Y₂O₃ | 11.0 | 11.8 | 13.0 | 12.8 | 13.0 | | 11.0 |
| Gd₂O₃ | | | | | | 10.0 | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | 5.8 |
| CaO | 8.0 | 6.9 | | | | | |
| SrO | | | | | | | |
| BaO | | | | | | | |
| Li₂O | | | 1.0 | | | | |
| Na₂O | | | | 0.5 | | | |
| K₂O | | | | 2.0 | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 43.60 | 43.50 | 40.78 | 39.90 | 40.28 | 40.28 | 39.68 |
| Ln₂O₃ | 46.40 | 47.60 | 40.72 | 40.60 | 40.72 | 40.00 | 35.52 |
| RO | 8.00 | 6.90 | 0.00 | 0.00 | 0.00 | 0.00 | 5.80 |
| Rn₂O | 0.00 | 0.00 | 1.00 | 2.50 | 0.00 | 0.00 | 0.00 |
| (SiO₂ + Al₂O₃)/B₂O₃ | 0.23 | 0.25 | 8.75 | 8.52 | 8.91 | 9.03 | 8.81 |
| SiO₂ + Al₂O₃ | 8.40 | 9.00 | 52.30 | 50.92 | 53.30 | 54.02 | 52.70 |
| Al₂O₃/Ln₂O₃ | 0.04 | 0.04 | 0.43 | 0.42 | 0.47 | 0.49 | 0.53 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃/(RO + Rn₂O + B₂O₃) | 1.21 | 1.30 | 13.33 | 10.79 | 15.72 | 15.72 | 7.49 |
| Ln₂O₃/Rn₂O | | | 40.72 | 16.24 | | | |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 0.00 | 0.00 | 58.28 | 142.25 | 0.00 | 0.00 | 0.00 |
| nd | 1.69 | 1.70 | 1.64 | 1.63 | 1.64 | 1.63 | 1.64 |
| vd | 55.7 | 55.7 | 55.1 | 55.0 | 54.9 | 55.3 | 54.8 |
| Specific gravity (d) | 3.62 | 3.64 | 3.34 | 3.36 | 3.37 | 3.41 | 3.38 |
| Powder method acid resistance (RA) | 4 | 4 | 1 | 1 | 1 | 1 | 1 |
| d × RA | 14.48 | 14.56 | 3.34 | 3.36 | 3.37 | 3.41 | 3.38 |
| Liquidus temperature | 1036 | | | | | | |

**[Table 27]**

| (Unit: mass%) | Example | | | | | | |
|---|---|---|---|---|---|---|---|
| | 2-102 | 2-103 | 2-104 | 2-105 | 2-106 | 2-107 | 2-108 |
| SiO₂ | 28.0 | 34.3 | 34.5 | 29.8 | 25.8 | 25.8 | 24.3 |
| B₂O₃ | 11.8 | 5.5 | 5.3 | 5.5 | 11.7 | 11.7 | 11.5 |
| Al₂O₃ | 11.0 | 11.0 | 11.8 | 17.0 | 10.5 | 10.5 | 12.5 |
| La₂O₃ | 36.2 | 36.1 | 24.0 | 35.8 | 41.2 | 26.0 | 39.0 |
| Y₂O₃ | 12.1 | 12.1 | | 11.9 | 9.8 | | 11.2 |
| Gd₂O₃ | | | 23.3 | | | 25.0 | |
| ZrO₂ | | | | | | | |
| TiO₂ | | | | | | | |
| Nb₂O₅ | | | | | | | |
| Ta₂O₅ | | | | | | | |
| WO₃ | | | | | | | |
| ZnO | | | | | | | |
| CaO | | | | | | | 1.0 |
| SrO | | | | | | | 0.5 |
| BaO | | | | | | | |
| Li₂O | 0.9 | 1.0 | 1.1 | | 1.0 | 1.0 | |
| Na₂O | | | | | | | |
| K₂O | | | | | | | |
| Sb₂O₃ | | | | | | | |
| TOTAL | 100.0 | 100.0 | 100.0 | 100.0 | 100.0 | 100.0 | 100.0 |
| SiO₂ + B₂O₃ | 39.80 | 39.80 | 39.80 | 35.30 | 37.50 | 37.50 | 35.80 |
| Ln₂O₃ | 48.32 | 48.20 | 47.30 | 47.70 | 51.00 | 51.00 | 50.20 |
| RO | 0.00 | 0.00 | 0.00 | 0.00 | 0.00 | 0.00 | 1.50 |
| Rn₂O | 0.88 | 1.00 | 1.10 | 0.00 | 1.00 | 1.00 | 0.00 |
| (SiO₂ + Al₂O₃)/B₂O₃ | 3.31 | 8.24 | 8.74 | 8.51 | 3.10 | 3.10 | 3.20 |
| SiO₂ + Al₂O₃ | 39.00 | 45.30 | 46.30 | 46.80 | 36.30 | 36.30 | 36.80 |
| Al₂O₃/Ln₂O₃ | 0.23 | 0.23 | 0.25 | 0.36 | 0.21 | 0.21 | 0.25 |
| ZrO₂ + TiO₂ + Nb₂O₅ + Ta₂O₅ + WO₃ + Bi₂O₃ + TeO₂ | 0.00 | 0.00 | 0.00 | 0.00 | 0.00 | 0.00 | 0.00 |
| (Ln₂O₃ + SiO₂ + Al₂O₃)/(RO + Rn₂O + B₂O₃) | 6.89 | 14.38 | 14.63 | 17.18 | 6.87 | 6.87 | 6.69 |
| Ln₂O₃/Rn₂O | 54.91 | 48.20 | 43.00 | | 51.00 | 51.00 | |
| BaO × Gd₂O₃ | 0.00 | 0.00 | 0.00 | 0.00 | 0.00 | 0.00 | 0.00 |
| (SiO₂ + B₂O₃ + Al₂O₃) × Rn2O | 44.70 | 50.80 | 56.76 | 0.00 | 48.00 | 48.00 | 0.00 |
| nd | 1.67 | 1.66 | 1.65 | 1.67 | 1.68 | 1.67 | 1.68 |
| vd | 54.5 | 53.3 | 53.8 | 52.8 | 53.7 | 54.2 | 53.4 |
| Specific gravity (d) | 3.57 | 3.57 | 3.67 | 3.65 | 3.65 | 3.83 | 3.73 |
| Powder method acid resistance (RA) | 2 | 1 | 1 | 1 | 2 | 2 | 2 |
| d × RA | 7.14 | 3.57 | 3.67 | 3.65 | 7.30 | 7.66 | 7.46 |
| Liquidus temperature | | | | | | | |

**[Table 28]**

| (Unit: mass%) | Example |
|---|---|
| | 2-109 |
| SiO₂ | 25.4 |
| B₂O₃ | 11.6 |
| Al₂O₃ | 11.5 |
| La₂O₃ | 25.3 |
| Y₂O₃ | |
| Gd₂O₃ | 25.0 |
| ZrO₂ | |
| TiO₂ | |
| Nb₂O₅ | |
| Ta₂O₅ | |
| WO₃ | |
| ZnO | |
| CaO | |
| SrO | |
| BaO | |
| Li₂O | 1.2 |
| Na₂O | |
| K₂O | |
| Sb₂O₃ | |
| TOTAL | 100.0 |
| SiO₂ + B₂O₃ | 37.00 |
| Ln₂O₃ | 50.30 |
| RO | 0.00 |
| Rn₂O | 1.20 |
| (SiO₂ + Al₂O₃)/B₂O₃ | 3.18 |
| SiO₂ + Al₂O₃ | 36.90 |
| Al₂O₃/Ln₂O₃ | 0.23 |
| ZrO₂ + TiO₂ + Nb₂O₅ + Ta₂O₅ + WO₃ + Bi₂O₃ + TeO₂ | 0.00 |
| (Ln₂O₃ + SiO₂ + Al₂O₃)/(RO + Rn₂O + B₂O₃) | 6.81 |
| Ln₂O₃/Rn₂O | 41.92 |
| BaO × Gd₂O₃ | 0.00 |
| (SiO₂ + B₂O₃ + Al₂O₃) × Rn2O | 58.20 |
| nd | 1.66 |
| vd | 54.5 |
| Specific gravity (d) | 3.80 |
| Powder method acid resistance (RA) | 2 |
| d × RA | 7.60 |
| Liquidus temperature | |

Glass blocks were formed by using the optical glasses of Examples of the present invention. The glass blocks were processed by grinding and polishing so as to have shapes of lenses and prisms. As a result, the glass blocks could be stably processed to have various shapes of lenses and prisms.

The present invention has been described in detail for purposes of illustration. However, it is to be understood that the Examples are merely illustrative, and many modifications can be made by those skilled in the art without departing from the spirit and scope of the present invention.

## Claims

1. An optical glass comprising:
in terms of mass%,
a SiO₂ component: 0% or more and less than 30.0%;
8.0% to 30.0% of an Al₂O₃ component;
less than 20.0% of an RO component (where R represents at least one selected from the group consisting of Zn, Mg, Ca, Sr, and Ba) in terms of a mass sum; and
10.0% to 55.0% of an Ln₂O₃ component (where Ln represents at least one selected from the group consisting of La, Gd, Y, and Lu) in terms of a mass sum,
wherein a mass ratio (SiO₂ + Al₂O₃)/B₂O₃ is 0.3 to 10.0, and
the optical glass has a refractive index (n_{d}) of 1.58 or more and 1.80 or less and an Abbe number (v_{d}) of 35 or more and 65 or less.

2. The optical glass according to Claim 1, wherein a mass ratio (Al₂O₃/Ln₂O₃) is 0.1 to 1.0.

3. The optical glass according to Claim 1 or 2, comprising:
in terms of mass%,
a B₂O₃ component: more than 0% and 50.0% or less;
a La₂O₃ component: 0% to 55.0%;
an Y₂O₃ component: 0% to 55.0%;
a Gd₂O₃ component: 0% to 55.0%;
a Lu₂O₃ component: 0% to 10.0%;
an Yb₂O₃ component: 0% to 10.0%;
a ZrO₂ component: 0% to 10.0%;
a TiO₂ component: 0% to 10.0%;
a Nb₂O₅ component: 0% to 15.0%;
a Ta₂O₅ component: 0% to 10.0%;
a WO₃ component: 0% to 10.0%;
a ZnO component: 0% to 15.0%;
a MgO component: 0% to 15.0%;
a CaO component: 0% to 15.0%;
a SrO component: 0% to 15.0%;
a BaO component: 0% to 15.0%;
a Li₂O component: 0% to 8.0%;
a Na₂O component: 0% to 8.0%;
a K₂O component: 0% to 8.0%;
a GeO₂ component: 0% to 10.0%;
a Ga₂O₃ component: 0% to 10.0%;
a P₂O₅ component: 0% to 30.0%;
a Bi₂O₃ component: 0% to 5.0%;
a TeO₂ component: 0% to 5.0%;
a SnO₂ component: 0% to 3.0%; and
an Sb₂O₃ component: 0% to 1.0%,
wherein a content of a fluoride with which a part or the whole of one or two or more of the oxides of metal elements is replaced is 0 mass% to 15.0 mass% in terms of F.

4. The optical glass according to any one of Claims 1 to 3, wherein a mass sum (ZrO₂ + TiO₂ + Nb₂O₅ + Ta₂O₅ + WO₃ + Bi₂O₃ + TeO₂) is 0% or more and 20.0% or less.

5. The optical glass according to any one of Claims 1 to 4, wherein a mass ratio (Ln₂O₃ + SiO₂ + Al₂O₃) / (RO + Rn₂O + B₂O₃) is 1.0 to 10.0.

6. The optical glass according to any one of Claims 1 to 5, wherein a mass ratio (Ln₂O₃/RO) is 1.0 or more.

7. The optical glass according to any one of Claims 1 to 6, wherein a mass ratio (Ln₂O₃/Rn₂O) is 3.0 or more.

8. The optical glass according to any one of Claims 1 to 7, comprising 0.0% to 8.0% of an Rn₂O component (where Rn represents at least one selected from the group consisting of Li, Na, and K) in terms of a mass sum.

9. An optical glass wherein,
in terms of mass%,
a mass sum (SiO₂ + B₂O₃) is 35.0% to 65.0%,
a mass sum of an Ln₂O₃ component (where Ln represents at least one selected from the group consisting of La, Gd, Y, and Lu) is 5.0% to 55.0%,
a mass sum of an Rn₂O component (where Rn represents at least one selected from the group consisting of Li, Na, and K) is 0.0% to 10.0%,
a mass ratio (Ln₂O₃/Rn₂O) is 1.0 or more,
a product d × RA of a specific gravity (d) of the glass and a class (RA) of a powder method acid resistance is 15.0 or less, and
the optical glass has a refractive index (n_{d}) of 1.58 or more and 1.80 or less and an Abbe number (v_{d}) of 35 or more and 65 or less.

10. The optical glass according to Claim 9, comprising:
in terms of mass%,
a SiO₂ component: 0% to 50.0%;
a B₂O₃ component: 0% to 50.0%;
0% to 30.0% of an Al₂O₃ component;
a La₂O₃ component: 0% to 55.0%;
an Y₂O₃ component: 0% to 55.0%;
a Gd₂O₃ component: 0% to 40.0%;
a Lu₂O₃ component: 0% to 10.0%;
an Yb₂O₃ component: 0% to 10.0%;
a ZrO₂ component: 0% to 10.0%;
a TiO₂ component: 0% to 10.0%;
a Nb₂O₅ component: 0% to 15.0%;
a Ta₂O₅ component: 0% to 10.0%;
a WO₃ component: 0% to 10.0%;
a ZnO component: 0% to 40.0%;
a MgO component: 0% to 20.0%;
a CaO component: 0% to 40.0%;
a SrO component: 0% to 40.0%;
a BaO component: 0% to 40.0%;
a Li₂O component: 0% to 8.0%;
a Na₂O component: 0% to 8.0%;
a K₂O component: 0% to 8.0%;
a GeO₂ component: 0% to 10.0%;
a Ga₂O₃ component: 0% to 10.0%;
a P₂O₅ component: 0% to 30.0%;
a Bi₂O₃ component: 0% to 5.0%;
a TeO₂ component: 0% to 5.0%;
a SnO₂ component: 0% to 3.0%; and
an Sb₂O₃ component: 0% to 1.0%,
wherein a content of a fluoride with which a part or the whole of one or two or more of the oxides of metal elements is replaced is 0 mass% to 15.0 mass% in terms of F.

11. The optical glass according to Claim 9 or 10, wherein a mass sum (SiO₂ + Al₂O₃) is 5.0% to 50.0%, and a mass ratio (SiO₂ + Al₂O₃) /B₂O₃ is 0.3 or more.

12. The optical glass according to any one of Claims 9 to 11, wherein a mass sum (ZrO₂ + TiO₂ + Nb₂O₅ + Ta₂O₅ + WO₃ + Bi₂O₃ + TeO₂) is 0% or more and 20.0% or less.

13. The optical glass according to any one of Claims 9 to 12, wherein a mass ratio (Ln₂O₃ + SiO₂ + Al₂O₃) / (RO + Rn₂O + B₂O₃) is 0.3 to 10.0.

14. The optical glass according to any one of Claims 9 to 13, comprising less than 40.0% of an RO component (where R represents at least one selected from the group consisting of Zn, Mg, Ca, Sr, and Ba) in terms of a mass sum.

15. The optical glass according to any one of Claims 1 to 14, wherein a mass product (BaO × Gd₂O₃) is less than 8.0.

16. The optical glass according to any one of Claims 1 to 15, wherein a mass product (SiO₂ + B₂O₃ + Al₂O₃) × Rn₂O is 0 to 500.

17. The optical glass according to any one of Claims 1 to 16, having a chemical durability (acid resistance) of Class 1 to Class 4 as measured by a powder method.

18. A preform material comprising the optical glass according to any one of Claims 1 to 17.

19. An optical element comprising the optical glass according to any one of Claims 1 to 17.

20. An optical device comprising the optical element according to Claim 19.
